# EUROPEAN PATENT SPECIFICATION

(11) **EP 1 783 771 B1**
(45) Date of publication and mention of the grant of the patent: **03.10.2012**
(21) Application number: 05768388.0
(22) Date of filing: 02.08.2005
(51) Int. Cl.: G11B 27/32

(54) **REPRODUCTION DEVICE, REPRODUCTION METHOD AND REPRODUCTION PROGRAM**
WIEDERGABEEINRICHTUNG, WIEDERGABEVERFAHREN AND WIEDERGABEPROGRAMM
DISPOSITIF DE REPRODUCTION, PROCEDE DE REPRODUCTION ET PROGRAMME DE REPRODUCTION

(30) Priority: 19.08.2004 JP 2004239346
(43) Date of publication of application: 09.05.2007
(73) Proprietor: Sony Corporation, Tokyo 141-0001 (JP); Sony Computer Entertainment Inc., Tokyo 107-0062 (JP)
(72) Inventor: HAMADA, Toshiya, Tokyo 1410001 (JP); FUJINAMI, Yasushi, Tokyo 1410001 (JP); KAKUMU, Tatsuya, Tokyo 1070062 (JP); OHSHIMA, Takenori, Tokyo 1070062 (JP)
(74) Representative: Davies, Simon Robert
(86) International application number: PCT/JP2005/014490
(87) International publication number: WO 2006/018999

(56) References cited:
- EP-A- 1 061 738
- EP-A- 1 326 173
- WO-A-2004/049710
- WO-A-2005/024828
- JP-A- 2001 332 006
- Jim Taylor: "DVD demystified", 31 December 2001 (2001-12-31), McGraw-Hill ISBN: 0071350268 pages 286-288,

## Description

### Technical Field

The present invention relates to a reproducing apparatus, a reproducing method, a reproducing program, a recording medium, and a data structure that allow the user to interactively operate a program recorded on a large capacity recording medium and a predetermined user's operation to be easily restricted.

### Background Art

As recording mediums that can be randomly accessed and attached/detached, it is a long time since DVDs (Digital Versatile Discs) appeared. In recent years, disc-shaped recording mediums that have larger storage capacities and are smaller and more convenient than the DVDs have been developed.

In the conventional reproduction-only DVD video standard, with button images and so forth that appear on a menu screen, an interactive function is accomplished. For example, while a moving picture is being reproduced from a DVD video disc, a menu screen is called with a remote control commander or the like. By selecting a button image that appears on the menu screen, reproduced scenes can be changed.

In the DVD video standard, a control program that accomplishes an interactive function is described with an original command defined in the DVD video standard. In addition, the control program that accomplishes the interactive function is dispersedly embedded in a plurality of positions of a plurality of files, data files, and AV stream files. The condition and order in which the control program is executed are defined in the DVD video standard.

Conventionally, it is difficult to create a general purpose content creation system. Thus, contents are created using so-called templates of which stories are created according to prewritten scenarios. When a content having a complicated structure is created, since the content cannot be created according to a prewritten template, a content creation system is custom-made.

While the main part of a movie is reproduced from a DVD video disc, the user can freely perform reproduction control operations such as an inter-chapter jump operation (hereinafter these operations are referred to as user's operations). However, in contents whose reproduction controls are complicated for example a multi-story content of which stories are branched in predetermined conditions or a quiz game content whose scenario advances according to user's selections, situations of which user's operations need to be restricted arise.

For example, in a multi-story content, a past reproduction history may affect the next story. In this case, it may be necessary to restrict user's operations such as a chapter change operation so that they do not change the pre-designated story.

As another example, a quiz game may be designated a time limit in which the user needs to answer questions. In this case, user's operations need to be restricted so that the user is prohibited from pausing the reproduction. In the case of a quiz game, it is also necessary to prohibit the user from jumping to an answer scene of a content without answering a question.

When there is an interaction between the user and a content, it is necessary to restrict user's operations so that the content is reproduced according to the content creator's intention.

In addition, before the main part of a content is reproduced, it may be necessary to present a predetermined warning message to the user. In this case, it is necessary to restrict user's operations so that he or she does not skip a warning message and fast forward it.

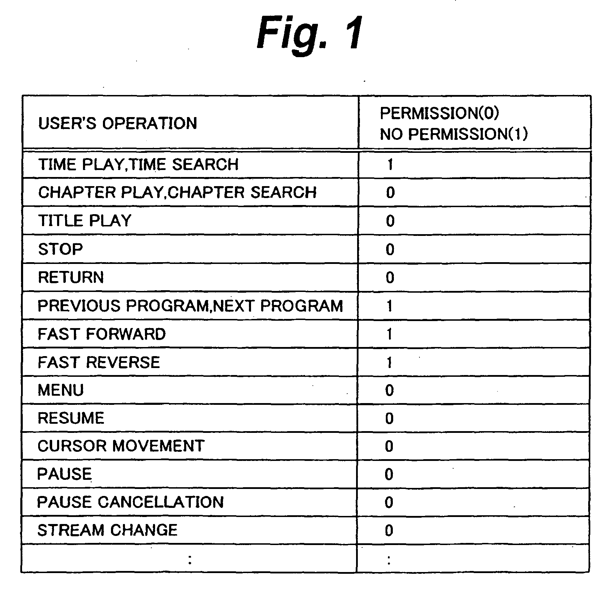

In the conventional DVD video standard, as shown in Fig. 1, flags that permit or do not permit user's operations such as reproduction, chapter jump, and so forth to be performed are provided. With the flags, user's operations are permitted or not permitted. Japanese Patent Laid-Open Publication No. 2003-203433 describes a technology of which prohibition flags that permit or do not permit predetermined operations of an information reproducing apparatus to be performed in the unit of PGC (Program Chain) according to the DVD video standard are described in PGCI (Program Chain Information) or PCI (Presentation Control Information).

However, the content creator side cannot easily use the method that designate flags for user's operations that the user can use.

When the content creator side does not want to permit a particular user's operation, it is expected that it will not permit other user's operations with respect to the particular user's operation. For example, when the content creator side wants not to permit user's operation "fast forward," it is expected that the content creator side will not want to permit user's operation "fast reverse." In the conventional DVD video standard, however, since flag "fast forward" is independent from flag "fast reverse," the content creator side needs to designate different flags for these user's operations.

In the conventional flag designation method, there will be many combinations of permission and non-permission of user's operations. Thus, when user's operations are restricted with flags, restrictions of some user's operations may be missed or may become inconsistent.

In a scene that a warning message or the like for the user appears, when user's operations "fast forward" and "fast reverse" are not permitted whereas user's operation "chapter jump" is permitted, if the user performs user's operation "chapter jump," he or she can skip the warning message.

On the other hand, it is thought that combinations of permission and non-permission of user's operations according to the intention of the content creator are limited to several combinations that are often used. Thus, the method that designate permission and non-permission for each user's operation has excessive flexibility. As a result, it is thought that restrictions of some user's operations may be missed and become inconsistent because the content creator side forget to designate them.

In addition, according to the DVD video standard, flags that restrict user's operations exist in a plurality of hierarchical levels from a lower hierarchical level close to an AV stream to an upper hierarchical level close to an application. Thus, when flags are designated, it is necessary to consider combinations of the flags among the hierarchical levels. Thus, it is difficult to designate the flags for the user's operations.

In addition, the content creator side has to check whether user's operations are restricted with flags according to the content creator side's intention. This increases the load of the content creator side.

In addition, since permission and non-permission of each user's operation can be designated, the player manufacturer side needs to check whether the player correctly operates in all the combinations. Thus, this increase the load of the player manufacturer side.

US 2005/0105888 discloses a disk recording medium. The stored information includes a field PL-UOP_mask_table() which describes information about restriction of user's operations. When the user is prohibited from performing operations such as playback, fast forward, etc while a play list is being reproduced, this region is properly described. Accordingly, a user can be prevented from skipping a copyright notice, etc even if a fast forward operation is performed. The stored information also includes a field PL_random_access_mode that describes whether random access in which any position of the play list is jump-reproduced from another play list can be performed.

"DVD demystified" by Jim Taylor, December 2001, see in particular pages 286-288, ISBN 0071350268, describes user operation controls (UOPs) which are flags that a DVD author sets to restrict a viewer's navigation options at any particular place on the disc. Each disc can enable or disable a user operation at any point. UOPs are implemented as 1-bit flags, each identified with a bit number from 0-25. UOPs can be placed at the title level, program chain (PGC) level, or video object unit (VOBU) level.

### Disclosure of the Invention

Therefore, an object of the present invention is to provide a reproducing apparatus, a reproducing method, a reproducing program, a recording medium, and a data structure that allow user's operations that reproduce a program recorded on a large capacity recording medium to be easily restricted.

The invention is defined in the appended claims.

As described herein, data are read from a recording medium on which at least content data, reproduction designation information that designates a reproduction path of the content data and contains a value representing a restriction mode as attribute information against a reproduction control designation for the content data, and a reproduction control program that controls the reproduction of the content data are recorded. A reproducing device reproduces content data according to the reproduction control program, creates a table for the value that represents the restriction mode of the reproduction designation information, and controls the permission or non-permission for the execution of the control command according to the table. Thus, when contents are created, restrictions for user's operations can be easily designated according to restriction modes in the unit of reproduction designation information. In addition, the reproducing apparatus side can easily check whether user's operations are restricted according to restriction modes.

In addition, at least content data, reproduction designation information that designates a reproduction path of the content data and contains a value representing a restriction mode as attribute information against a reproduction control designation for the content data, and a reproduction control program that controls the reproduction of the content data are recorded on a recording medium. Thus, when contents are created, reproduction control designation for content data according to user's operations for the reproducing apparatus that reproduces data from a recording medium can be easily made according to restriction modes. In addition, the reproducing apparatus side can easily check restrictions for user's operations according to restriction modes.

In addition, a data structure composed of content data and information for controlling the reproduction of the content data, has content data, reproduction designation information that designates a reproduction path of the content data and contains a value representing a restriction mode as attribute information against a reproduction control designation for the content data, and a reproduction control program that controls the reproduction of the content data. Thus, when contents are created, reproduction control designation for content data according to user's operations for the reproducing apparatus that reproduces data having the data structure can be easily made according to restriction modes. In addition, the reproducing apparatus side can easily check restrictions for user's operations according to restriction modes.

According to the present approach, combinations of restrictions of user's operations are defined as modes. The player side has sets of user's operations that are often used in advance. The content creator side selects a mode as a combination of user's operations from those to control them.

Thus, only by selecting a mode from those that the player side has, the content creator side can restrict user's operations. As a result, the content creator side can more easily control user's operations. In addition, the load of the content creator side that create and check contents it created decreases.

### Brief Description of Drawings

Fig. 1 is a schematic diagram describing a user operation control according to the conventional DVD video standard;
Fig. 2 is a schematic diagram showing the structure of layers according to the UMD video standard;
Fig. 3 is a schematic diagram showing an example of a player model ;
Fig. 4 is a schematic diagram showing an example of the internal structure of a movie player;
Fig. 5 is a schematic diagram showing an example of the internal structure of the movie player;
Fig. 6 is a schematic diagram showing an event model of the movie player ;
Fig. 7 is a schematic diagram showing examples of events that occur while a play list is being reproduced;
Fig. 8 is a schematic diagram showing a list of examples of properties of a movie player object;
Fig. 9 is a schematic diagram showing a list of examples of methods of a movie player object;
Fig. 10 is a schematic diagram showing examples of key inputs as user's inputs;
Fig. 11 is a schematic diagram showing examples of key inputs as user's inputs;
Fig. 12A, Fig. 12B and Fig. 12C are schematic diagrams showing examples of control commands according to key inputs;
Fig. 13 is a schematic diagram showing examples of events according to key inputs;
Fig. 14 is a schematic diagram showing examples of event handlers;
Fig. 15 is a schematic diagram showing examples of event handlers;
Fig. 16 is a flow chart showing an example of a process that executes a predetermined program according to a user's input event;
Fig. 17 is a flow chart showing a process performed after a disc is loaded into a UMD video player until the disc is ejected therefrom;
Fig. 18 is a schematic diagram showing an example of the structure of a script file;
Fig. 19 is a flow chart showing an example of a procedure that executes event handler onAutoPlay();
Fig. 20 is a flow chart showing an example of a procedure that executes event handler onContinuePlay();
Fig. 21 is a flow chart showing an example of a process performed upon completion of reproduction;
Fig. 22 is a schematic diagram describing an example of a script program;
Fig. 23 is a schematic diagram showing an example of a script program;
Fig. 24 is a schematic diagram describing a file management structure according to the UMD video standard;
Fig. 25 is a schematic diagram showing an example of syntax of the entire structure of file "PLAYLIST.DAT";
Fig. 26 is a schematic diagram showing an example of the internal structure of block PlayItem();
Fig. 27 is a schematic diagram showing an example of the internal structure of block PlayListMark();
Fig. 28 is a schematic diagram describing field mark_type of block Mark();
Fig. 29 is a schematic diagram describing designation of a mark time in a clip AV stream file;
Fig. 30 is a schematic diagram showing an example of syntax that represents the entire structure of clip AV stream file "XXXXX.CLP";
Fig. 31 is a schematic diagram describing correlation of block StreamInfo() and an elementary stream;
Fig. 32 is a schematic diagram showing an example of the internal structure of block StaticInfo();
Fig. 33 is a schematic diagram showing an example of the internal structure of block DynamicInfo();
Fig. 34 is a schematic diagram showing an example of the internal structure of block EP_map();
Fig. 35 is a block diagram showing an example of the structure of a disc reproducing apparatus ;
Fig. 36A and Fig. 36B are functional block diagrams describing the operations of the disc reproducing apparatus in detail;
Fig. 37 is a schematic diagram showing an example of syntax of file "PLAYLIST.DAT" according to an embodiment of the present invention;
Fig. 38 is a schematic diagram showing examples of meanings of values of field UOP_mask_mode;
Fig. 39 is a functional block diagram showing an example of a user's operation restriction function in a movie player;
Fig. 40 is a flow chart showing an example of a procedure that creates a command filter table;
Fig. 41 is a schematic diagram showing an example of a command filter table according to user's operation mask mode "1";
Fig. 42 is a schematic diagram showing an example of a command filter table according to user's operation mask mode "2"; and
Fig. 43 is a flow chart showing an example of a process that restricts user's operations with a command filter table.

### Best Modes for Carrying out the Invention

Next, an embodiment of the present invention will be described in the following order.
- 1.: UMD video standard
- 2.: Player model according to UMD video standard
- 3.: Event model of movie player
- 4.: Movie player object
- 5.: Example of script program
- 6.: File management structure
- 7.: Disc reproducing apparatus
- 8.: Control of user's operations

### 1. UMD video standard

For easy understanding of the present invention, a system according to an embodiment of the present invention will be described. As described herein, a player model is described with a script language called an ECMA script. The ECMA script is a script language for a cross platform based on JavaScript (registered trademark) and standardized by European Computer Manufacturers Association (ECMA). The ECMA script has higher compatibility with HTML documents. In addition, since the ECMA script allows original objects to be defined, the ECMA script can be suitably used for a player model as described herein.

In the following description, the standard that uses a script language based on the ECMA script is referred to as UMD (Universal Media Disc: registered trademark) video standard. A script part of the UMD video standard is referred to as the UMD video script standard.

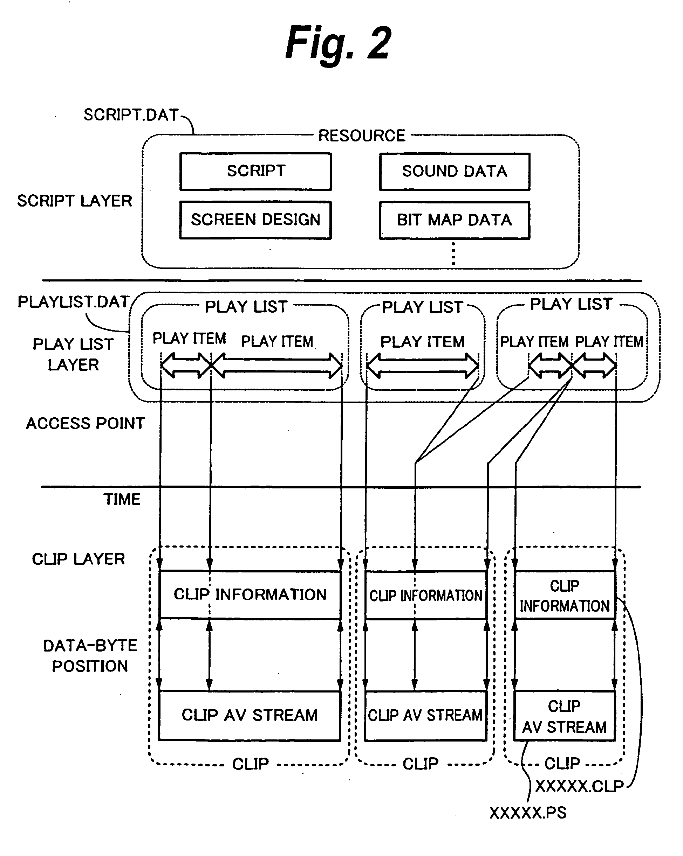

Next, the UMD video standard will be described in brief. Fig. 2 shows the structure of layers of the UMD video standard. The UMD video standard defines a three-layer structure composed of a script layer, a play list layer, and a clip layer. Streams are managed according to this layer structure.

According to the UMD video standard, digitally encoded video data, audio data, and subtitle data are treated as an MPEG2 stream of which they have been multiplexed as an elementary stream according to the MPEG2 (Moving Picture Experts Group 2) system. An MPEG2 stream of which elementary streams of video data, audio data, and subtitle data have been multiplexed is referred to as a clip AV stream. A clip AV stream is stored in a clip AV stream file. When a clip AV stream file is recorded, a clip information file is created according to the clip AV file in the relation of 1 to 1. A pair of a clip information file and a clip AV stream file corresponding thereto is referred to as a clip.

A clip is a recording unit of a disc. The reproduction order of clips is managed in the play list layer higher than the clip layer. The play list layer is a layer that designates the reproduction path of clips. The play list layer contains one or a plurality of play lists. A play list is composed of a set of play items. A play item contains a pair of an IN point and an OUT point that represent the reproduction range of a clip. When play items are placed, clips can be reproduced in any order. A play item can redundantly designate clips. The IN point and the OUT point of a clip AV stream are designated with time stamps (intra-clip times). Time stamps are converted into byte positions of a clip AV stream file according to information of a clip information file.

A play list has a structure that reproduces play items that represent all or part of clips in a predetermined order. Only with a play list, the reproduction order of clips cannot be changed. In addition, a play list does not provide the user with an interactive function. As described herein, a plurality of play lists are collectively stored in one file "PLAYLIST.DAT."

The script layer is a layer composed of UMD video scripts as an extension of ECMA scripts as language specifications. An UMD video script is a script of which an ECMA script is extended to accomplish a special function based on the UMD video standard.

The script layer is an upper layer of the play list layer. The script layer is composed of a sequence of commands that designate the reproduction of a play list and that set a player. Commands in the script layer accomplish play list reproduction including a conditional branch so that one of streams according to a plurality of languages can be selected or streams can be reproduced according to a play list selected in a predetermined condition. An example of an application that uses play list reproduction including a conditional branch is a multi-story content. The script layer provides the user with an interactive function.

As described herein, the script layer is composed of one file "SCRIPT.DAT." File "SCRIPT.DAT" is managed as a resource. File "SCRIPT.DAT" contains script data described according to a real ECMA script, sound data for sound effects and so forth in button operations, a screen design composed of image data used for a background image and so forth of a menu screen, and image data (bit map data) for GUI parts such as button images.

### 2. Player model according to UMD video standard

Next, a model of a reproducing apparatus (player) that reproduces data according to the UMD video standard, namely a player model, will be described. The player reads a script program, a play list, and a clip information file from a disc. Thereafter, the player reads a clip AV stream file in the reproduction order according to those files and reproduces video data, audio data, subtitle data, and so forth.

In the language specifications of the script program, a functional block that reproduces a play list is implemented as an object in the script program. According to the UMD video standard, the object that reproduces the play list is referred to as the movie player object. Commands that designate the reproduction of the play list and set the player are methods of the movie player object. The movie player object is controlled by the methods of the script layer. At this point, the movie player object requires a function that informs the script layer of a state change, a reproduction position, and so forth. This function corresponds to an operation that the movie player object issues an event to the script program. A process corresponding to the event is described as an event handler.

When a model of which the movie player object transfers information as an event to the script program and the script program controls the movie player object with a method is made, the script program can control the reproduction of a clip AV stream.

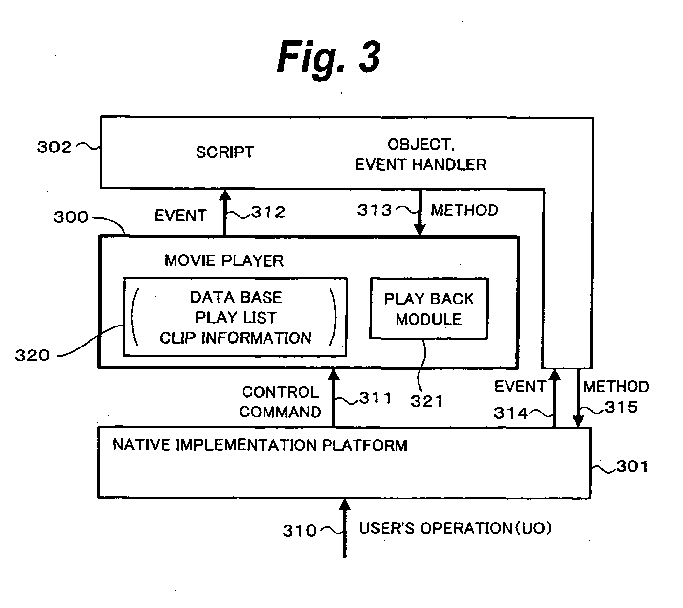

Fig. 3 schematically shows an example of the player model as described herein. A movie player 300 is a module that reproduces video data, audio data, and subtitle data according to the UMD video standard. The movie player object is an object in a script program so that the script program operates a movie object. In other words, the movie player object is a script program that accomplishes the function of the movie player.

Since it is thought that the movie player 300 and the movie player object are substantially the same, in the following description, they are denoted by the same reference numeral.

In Fig. 3, the movie player 300 reads a clip AV stream file according to a database of a play list or clip information with a method of a lower layer (a native implementation platform 301 in the example shown in Fig. 3) as a user's input 310 or the like or a method of a script layer 302 as an upper layer and decodes and displays the clip AV stream.

The inside of the movie player object 300 depends on the implementation of the UMD video player that reproduces data from the UMD video disc. The script layer 302 provides APIs (Application Programming Interfaces) that are methods and properties as black-box objects. In this case, the UMD video player represents a real device that implements a movie player. All UMD video players implement a movie player according to the UMD video standard and have reproduction compatibility with other UMD video players.

As shown in Fig. 3, the movie player 300 has three input/output paths that are a path through which a control command 311 is received from the native implementation platform 301, a path through which the script layer 302 is informed of an event 312, and a path through which a method 313 is received from the script layer 302.

The control command 311 is a command that is received from the native implementation platform 301 and that controls the operation of the movie player object 300. The native implementation platform 301 is an interface between an original portion of the UMD video player as a real device and the movie player 300. The event 312 is a script event sent from the movie player 300 to the script layer 302. The method 313 is a method that a script program of the script layer 302 designates to the movie player 300.

The movie player object 300 has a database 320 for play lists and clip information according to the UMD video standard. The movie player object 300 masks the user's input 310. In addition, the movie player object 300 performs for example a process that converts the reproduction position designated by a time into a byte position of a clip AV stream with the database 320.

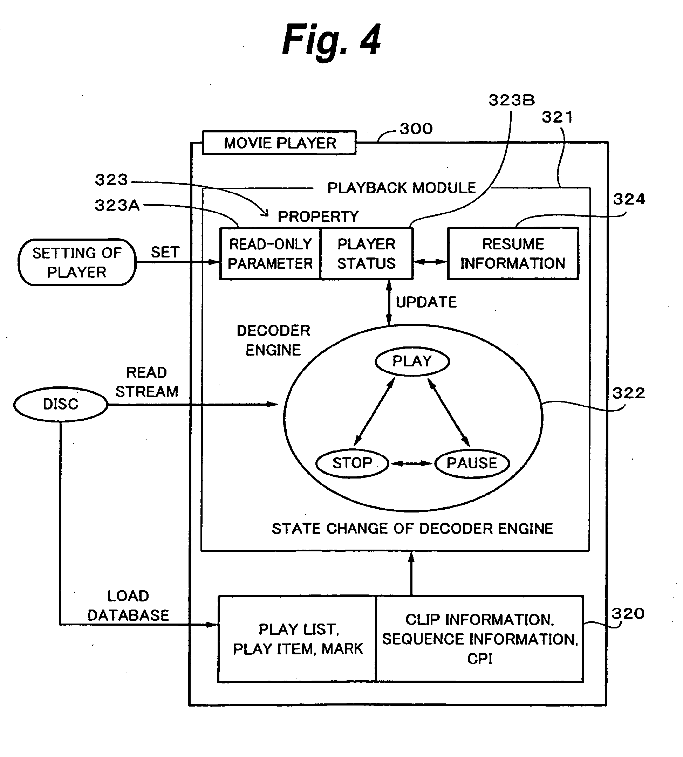

A playback module 321 of the movie player object 300 decodes a clip AV stream, which is an MPEG2 PS (Program Stream) of which video data, audio data, and subtitle data have been multiplexed. The playback module 321 has three states that are play, stop, and pause. The playback module 321 changes among these states with a control command and a method (see Fig. 4).

The script layer 302 is a layer that executes a script program according to the UMD video script standard, controls the movie player object 300, and displays data on the display. The script layer 302 accomplishes a scenario that the content creator side intends. The script layer 302 issues the method 313 to the movie player object 300. The script layer 302 receives the event 312 from the movie player object 300. The script layer 302 exchanges a key event 314 according to the user's input 310 and a method 315 that causes the native implementation platform 301 to display data on the display with the native implementation platform 301.

For example, buttons on the menu screen are generated by the native implementation platform 301 according to the method 315 supplied from the script program of the script layer 302 to the native implementation platform 301. When the user performs an operation such as selection or decision for one of the buttons, the key event 314 according to the user's input 310 is sent from the native implementation platform 301 to the script layer 302. The script program of the script layer 302 performs a process with the key event 314 according to the user's input 310.

Thus, the movie player 300 performs decode and display controls for video data, audio data, and subtitle data. On the other hand, the script layer 302 performs arrange and display processes for part images that compose graphical user interfaces such as buttons (hereinafter, these part images are referred to as GUI parts) and processes against selection and decision operations of the GUI parts.

The native implementation platform 301 is a platform for operations of the movie player object 300 and the script program. When the real UMD video player is hardware, the native implementation platform 301 is implemented as hardware so that the native implementation platform 301 intermediates a process between hardware and the player model.

The native implementation platform 301 receives the user's input 310 from the user and determines whether the received user's input 310 is a command for the movie player 300 or a command for a button generated and displayed in the script layer 302. When the determined result represents that the user's input 310 is a command for the movie player 300, the native implementation platform 301 converts the user's input 310 into the control command 311 that is an internal control command for the movie player 300 and issues a control command to the movie player 300.

When the determined result represents that the user's input 310 is a command of a GUI part generated and displayed in the script layer 302, the native implementation platform 301 informs the script layer 302 of the key event 314 according to the user's input 310. For example, the native implementation platform 301 can display for example a button image on the display according to the method 315 that the script layer 302 designates according to the key event 314. In other words, the native implementation platform 301 and the script layer 302 can directly exchange an event and a method not through the movie player 300.

Next, the movie player 300 will be described in details. Fig. 4 shows an example of the internal structure of the movie player 300. As described above, the movie player 300 is composed of the database 320 and the playback module 321. The database 320 is an area that stores information of a play list read from the disc and information of clips, namely clip information.

The playback module 321 is composed of a decoder engine 322 and a property 323. The property 323 is a value that represents the state of the playback module 321. The property 323 has two types of a property 323A (read-only parameter) whose value depends on the initial setting of the movie player 300 like a language code and a property 323B (player status) whose value depends on the state of the playback module 321.

The value of the property 323A, whose value depends on the initial setting, is set by a native device for example a real device. Thus, the value of the property 323A is not changed by a play list, clip information, and a script program. The value of the property 323A can be read from a script program. In contrast, the value of the property 323B, which represents the state of the playback module 321, can be read from a script program. In addition, the value of the property 323B can be written from some script programs.

In this operation model, it is assumed that a play list and clip information are pre-loaded from the disc before a clip AV stream is reproduced. Instead, the operations of the movie player model may be accomplished in another implementation.

The movie player object 300 reproduces a play list designated by the script layer 302 or the native implementation platform 301. For example, the movie player 300 references the database 320 and obtains the reproduction position of the clip AV stream as the byte position of the file according to the designated play list. In the playback module 321, the decoder engine 322 controls the decoding of the clip AV stream according to the information of the reproduction position.

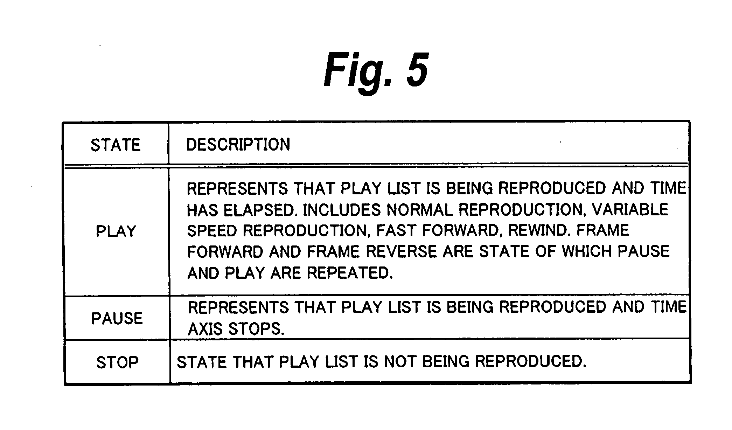

As shown in Fig. 5, the movie player 300 has three states of play, stop, and pause depending on the reproduction state of a play list. The play state represents that a play list is being reproduced and a time has elapsed. The play state includes regular reproduction, variable speed reproduction such as double speed reproduction and 1/2 speed reproduction, fast forward, and fast reverse. The pause state represents that a play list is being reproduced and time axis stops. So-called frame reproduction, of which frames are forward and reverse reproduced, is a state of which the pause state and the play state are repeated. The stop state represents that a play list is not being reproduced.

The state of the movie player 300 depends on the state change among play, pause, and stop of the decoder engine 322 of the movie player 300. The value of the property 323B is updated according to the state change of the decoder engine 322.

Resume information 324 stores the state that exits immediately before the stop state occurs. After the movie player 300 decodes a play list, when the movie player 300 is in the play state, if the state of the movie player 300 is changed to the stop state, the resume information 324 stores the state that exists immediately before the stop state occurs. In addition, the resume information 324 for each title of the disc can be stored in a nonvolatile memory of the player as hardware. The disc has unique identification information (referred to as title ID) for each title of the disc. The resume information 324 and the identification information are correlatively stored. Thus, when the state of the disc having the title according to the identification information is changed from the stop state to the play state, data can be reproduced from the position at which the stop state occurred.

### 3. Event model of movie player

Next, an event model of the movie player 300 will be described. In the play state, the movie player 300 reproduces a play list and generates various events. The events execute process programs described as scripts and referred to as event handlers. The event handlers are methods called upon occurrence of events. A program execution model that starts executing a process program upon occurrence of an event is referred to as an event driven model. In an event driven model, an irregular event occurs. When the event occurs, a predetermined program is executed. As described herein, a script program controls the operations of the movie player object 300 with an event handler group.

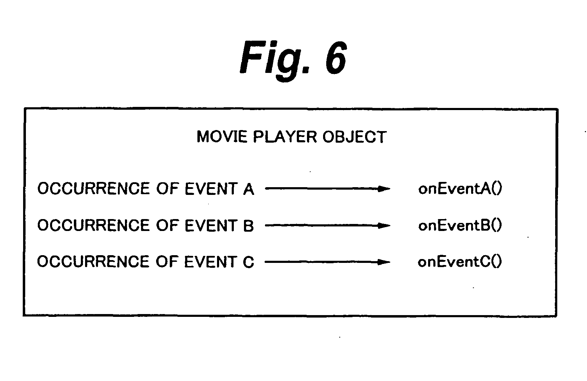

Fig. 6 schematically shows an event model of the movie player 300. In Fig. 6, event handlers onEventA(), onEventB(), and onEventC() are interfaces. The contents of the event handlers are described as scripts. The contents of the event handlers are created and implemented by for example the content creator side. In the UMD video scrip standard, an event handler is provided for each event of which the movie player object 300 informs the script program. In the example shown in Fig. 6, it is decided that a process program executed upon occurrence of event A is event handler onEventA(). This applies to event B and event C. Thus, when event B occurs, corresponding event handler onEventB() is executed. When event C occurs, corresponding event handler onEventC() is executed.

Since the system side selects an event handler called upon occurrence of an event, the content creator side does not need to describe a process that determines what event occurred in a script program.

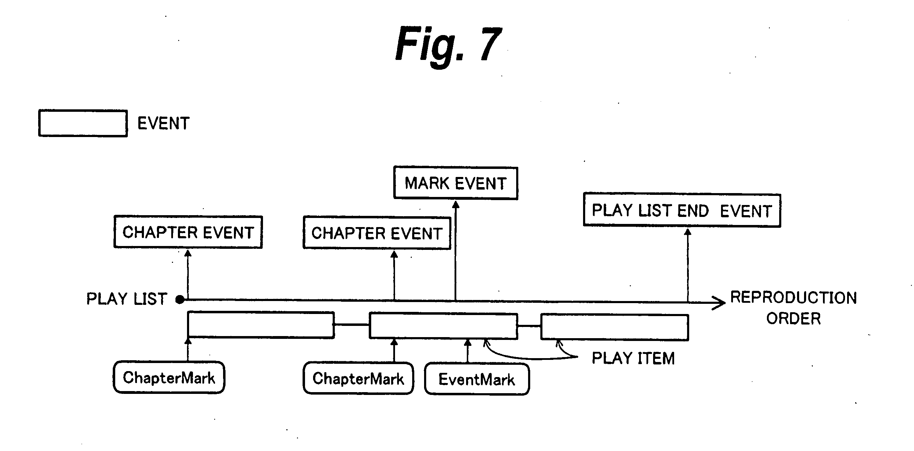

Fig. 7 shows examples of events that occur while a play list is being reproduced. Since chapter mark ChapterMark is described at the beginning of play list PlayList, when the play list is reproduced from the beginning, event Chapter corresponding to the chapter mark occurs. Whenever the chapter is changed to another chapter, the script layer 302 is informed of event Chapter and the corresponding event handler onChapter is executed. When reproduction time for event mark EventMark elapses, a corresponding mark event occurs. At the end of the play list, the movie player 300 pauses the reproduction of the play list and informs the script layer 302 of event PlayListEnd. The script layer 302 side causes the movie player 300 to start reproducing another play list in the corresponding event handler onPlayListEnd(). In such a manner, the movie player 300 continues to reproduce a sequence of play lists in the order that the content creator side intended.

In such a manner, while the player is operating, various events occur. When an upper level program is informed of an occurrence of an event, the upper level program can grasp the state of the player. When the upper level program provides programs (event handlers) that are executed according to events of which it is informed, it can handle various events. Events and event handlers will be described later.

When the content creator side has not described an event handler, the upper program executes an operation (default event handler) built in the player and that is defined in the standard or ignores the event. When no process is required, if an event handler according to the event is not described, the event can be actively ignored.

As event models, there may be an event listener model, a single-method model, and so forth. In an event listener model, an object registers a listener according to a predetermined event to the player object. When an event that occurs in the player object is an event that has been registered, the player object transmits the event to the object that has registered the event. The object executes a corresponding method. In a single-method model, one method is called whatever event occurs.

The event model as described herein is simpler than an event listener model that requires processes such as event registration process and event deletion process. The single-method model needs to know what event occurred and describe in the method a pre-process that changes a process routine according to each event that occurs. Since the method is implemented by the content creator side, even if the model is simple, the load of the content creator side increases. In addition, whenever an event occurs, since one large process program (method) is called, a large memory area will be used and the execution speed will become slow. Thus, since the model as described herein provides process programs (event handlers) according to individual events, the model is superior to the other models in these points.

### 4. Movie player object

Next, the external specifications of the movie player object 300 will be described. Generally, an object defined according to the ECMA script language specifications has a property and a method. Like this object, as shown in Fig. 3 and Fig. 4, the movie player object 300 has a property and a method. When an external object designates an object name and a property name, the object can directly read and write a property. Instead, when method setXXX() (where "XXX" represents a property name) that sets a property value and method getXXX() that reads a property value are defined, the methods can read and write properties of other objects.

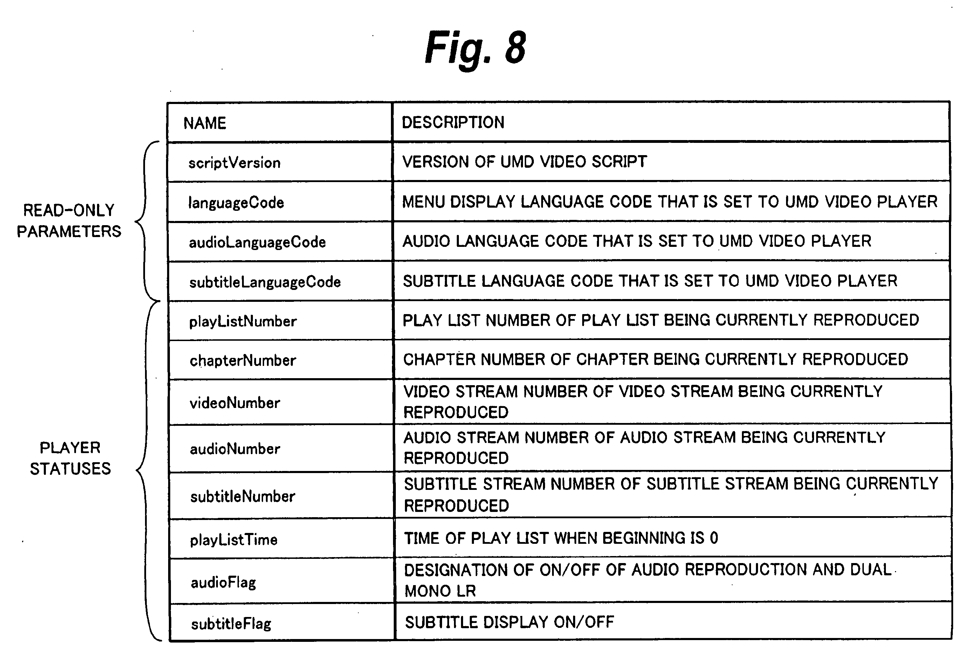

Fig. 8 shows a list of examples of properties that the movie player object 300 has. These properties correspond to the property 323 shown in Fig. 4. The properties that belong to the read-only parameters 323A shown in Fig. 4 are as follows. Property scriptVersion represents the version of the UMD video script. Property languageCode represents the language code of the menu display language that is set to the UMD video player. Property audioLanguageCode represents the language code of the audio language that is set to the UMD video player. Property subtitleLanguagecode represents the language code of the subtitle language that is set to the UMD video player.

When a disc is loaded into the movie player 300, a scrip file that is read from the disc is decided according to the language code represented by property languageCode that is set in the read-only parameter 323A. When the disc loaded into the movie player 300 does not have a script file according to the language, a default script file is read from the disc. For example, a file recorded at the beginning of a plurality of script files is read as a default script file.

Properties that belong to the player status 323B shown in Fig. 4 are as follows. Property playListNumber represents the play list number of a play list that is currently being reproduced. Property chapterNumber represents the chapter number of a chapter that is currently being reproduced. Property videoNumber represents the video stream number of a video stream that is currently being reproduced. Property audioNumber represents the audio stream number of an audio stream that is currently being reproduced. Property subtitleNumber represents the subtitle stream number of a subtitle stream that is currently being reproduced. Property playListTime represents the time of the play list when the beginning of the play list is 0. Property audioFlag designates ON/OFF of the audio reproduction and dual monaural LR. Property subtitleFlag represents ON/OFF of the subtitle indication.

The dual monaural is a mode of which left and right (L, R) channels of stereo audio are independently used as monaural audio channels.

When the movie player 300 is in the play state or the pause state, each property that belongs to the player status 323B represents these information. When the movie player 300 is changed to the stop state, each property that belongs to the player status 323B is backed up as the resume information 324. At this point, the contents of the player status 323B may be cleared.

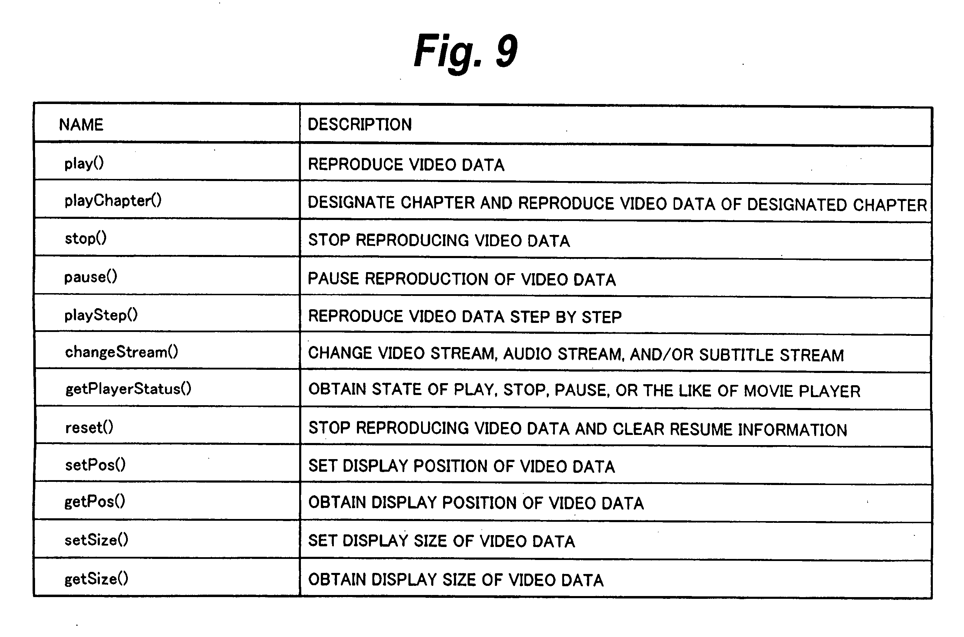

Fig. 9 shows a list of examples of methods that the movie player object 300 has. The methods correspond to the method 313 shown in Fig. 3. Method play() reproduces video data. Method playChapter() designates a chapter and reproduces video data of the designated chapter. Method stop() stops reproducing video data. Method pause() pauses the reproduction of video data. Method playStep() reproduces video data step by step. Method changeStream() changes a video stream, an audio stream, and/or a subtitle stream. Method getPlayerStatus() obtains the play state, the stop state, the pause state, or the like of the movie player 300. Method reset() stops the reproduction of video data and clears the contents of the resume information 324.

According to the UMD video standard, video data can be displayed at a part of the display screen. The following four methods are methods that display video data at a part of the display screen. Method setPos() sets the display position of video data. Method getPos() obtains the display position of video data. Method setSize() sets the display size of video data. Method getSize() obtains the display size of video data.

In reality, the movie player 300 and the native implementation platform 301 are integrated. In other words, the movie player 300 UMD and the native implementation platform 301 are correlated as hardware, a UMD player that loads a disc and reproduces video data from the disc, and software that controls the UMD player. What portion is hardware and what portion is software depend on the implemented structure. For example, when the UMD player is a personal computer or the like, the other portions except for the disc dive are composed of software. When a single UMD player is used, besides the disc drive, for example the video decoder, the audio decoder, and so forth may be composed of hardware. Thus, methods, commands, and events exchanged between the movie player 300 and the native implementation platform 301 are not limited to those explicitly shown in Fig. 3.

On the other hand, with respect to key inputs of the user, as shown in Fig. 3, the user's input 310 is received first by the native implementation platform 301. In other words, the native implementation platform 301 receives a key input of the user as the user's input 310. The native implementation platform 301 determines whether the user's input 310 is a command to the movie player 300 or an event to a script program of the script layer 302. Depending on the determined result, the native implementation platform 301 generates the control command 311 or the key event 314 and informs the corresponding upper layer (movie player 300 or the script layer 302) of the generated control command 311 or key event 314.

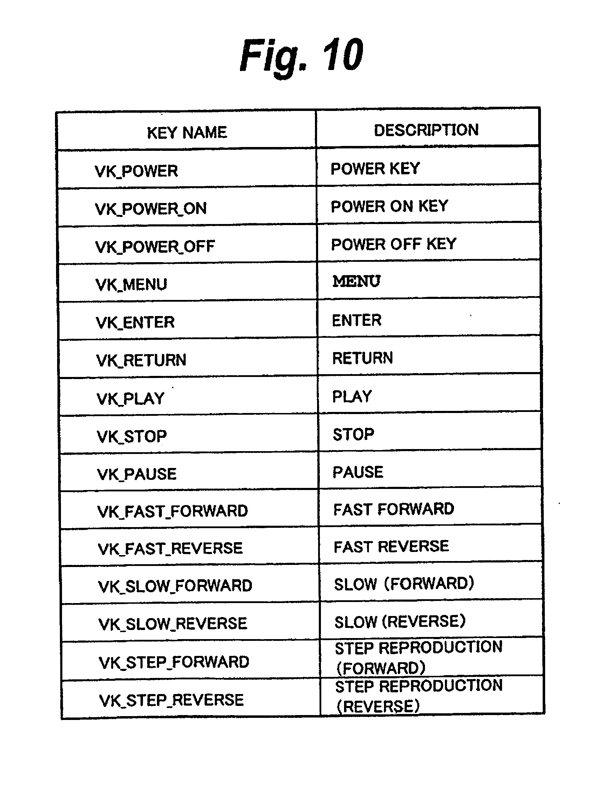

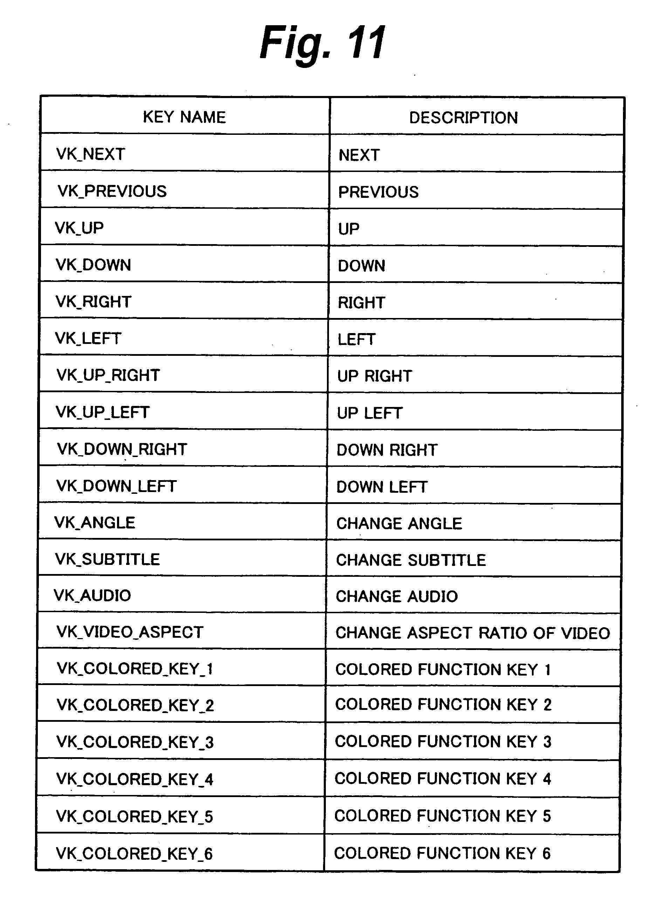

Fig. 10 and Fig. 11 show examples of key inputs of the user's input 310. In Fig. 10 and Fig. 11, keys having prefix "VK" are abstracted virtual keys that do not depend on the implementation. Fig. 10 shows examples of key inputs with respect to the operations of the movie player 300. Key VK_POWER provides a function corresponding to a power key. Key VK_POWER_ON provides a function corresponding to a power ON key. Key VK_POWER_OFF provides a function corresponding to a power OFF key. Key VK_MENU provides a function corresponding to a menu key that displays a menu. Key VK_ENTER provides a function corresponding to an enter key that ends a command or data input. Key VK_RETURN provides a function that returns the process by one step.

Key VIC_PLAY provides a function corresponding to a play key that starts the reproduction operation. Key VK_STOP provides a function corresponding to a stop key that stops the reproduction operation. Key VIC_PAUSE provides a function corresponding to a pause key that pauses the reproduction operation. Key VK_FAST_FORWARD provides a function corresponding to a fast forward key that performs the fast forward reproduction operation. Key VK_FAST_REVERSE provides a function corresponding to a fast reverse key that performs the fast reverse reproduction operation. Key VK_SLOW_FORWARD provides a function corresponding to a slow (forward) key that performs the forward slow reproduction operation. Key VK_SLOW_REVERSE provides a function corresponding to a slow (reverse) key that performs the reverse slow reproduction operation. Key VK_STEP_FORWARD provides a function corresponding to a step (forward) key that performs the forward step reproduction operation. Key VK_STEP_REVERSE provides a function corresponding to a frame (reverse) key that performs the reverse step reproduction operation.

Fig. 11 shows key inputs with respect to the menu operations. Key VK_NEXT provides a function corresponding to a next designation key that inputs a value that represents "next." Key VK_PREVIOUS provides a function corresponding to a previous designation key that inputs a value that represents "previous." With key VK_NEXT and key VK_PREVIOUS, the user can designate for example the movement to the next chapter and the previous chapter, respectively.

Key VK_UP provides a function corresponding to an up direction designation key that inputs a value that represents "up." Key VK_DOWN provides a function corresponding to a down direction designation key that inputs a value that represents "down." Key VK_RIGHT provides a function corresponding to a right direction designation key that input a value that represents "right." Key VK_LEFT provides a function corresponding to a left direction designation key that inputs a value that represents "left." Key VK_UP_RIGHT provides a function corresponding to an upper right direction designation key that inputs a value that represents "upper right." Key VK_UP_LEFT provides a function corresponding to an upper left direction designation key that inputs a value that represents "upper left." Key VK_DOWN_RIGHT provides a function corresponding to a down right direction designation key that inputs a value that represents "down right."Key VK_DOWN_LEFT provides a function corresponding to a down left direction designation key that inputs a value that represents "down left." With these direction keys, the user can designate for example the movement of the cursor on the display.

Key VK_ANGLE provides a function corresponding to an angle change key that designates an angle change operation for multi-angle video data. Key VK_SUBTITLE provides a function corresponding to a subtitle change key that designates English subtitle, Japanese subtitle, and subtitle ON/OFF. Key VK_AUDIO provides a function corresponding to an audio change key that designates an audio mode such as surround mode or bilingual mode. Key VK_VIDEO_ASPECT provides a function corresponding to an aspect change key that changes an aspect ratio of video data. Key VK_COLORED_KEY_1 provides a function corresponding to a colored function key 1. Key VK_COLORED_KEY_2 provides a function corresponding to a colored function key 2. Key VIC_COLORED KEY_3 provides a function corresponding to a colored function key 3. Key VK_COLORED_KEY_4 provides a function corresponding to a colored function key 4. Key VK_COLORED_KEY_5 provides a function corresponding to a colored function key 5. Key VK_COLORED_KEY_6 provides a function corresponding to a colored function key 6.

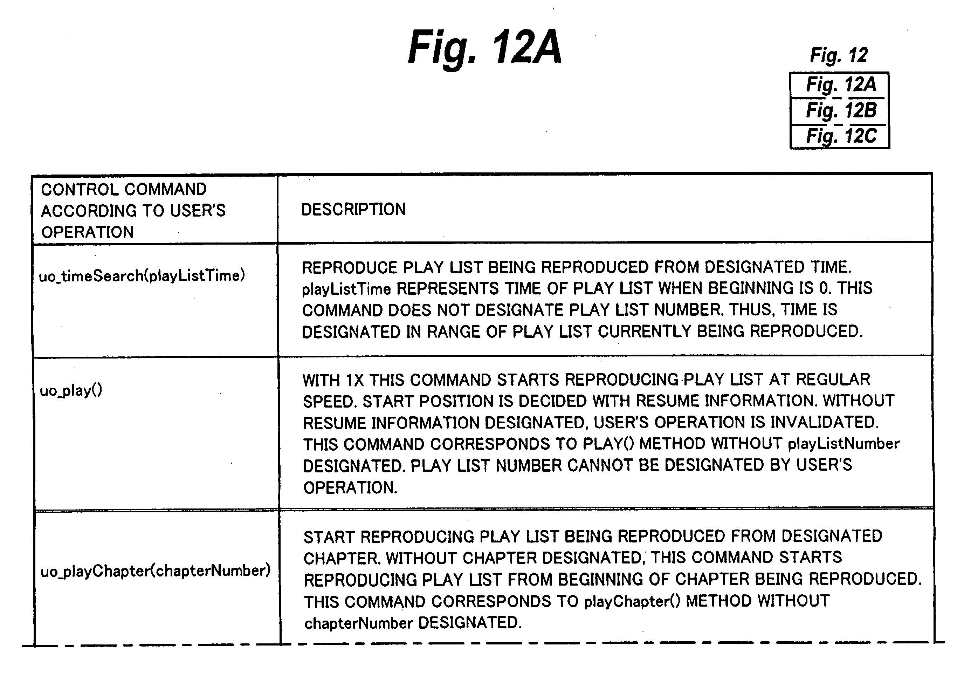

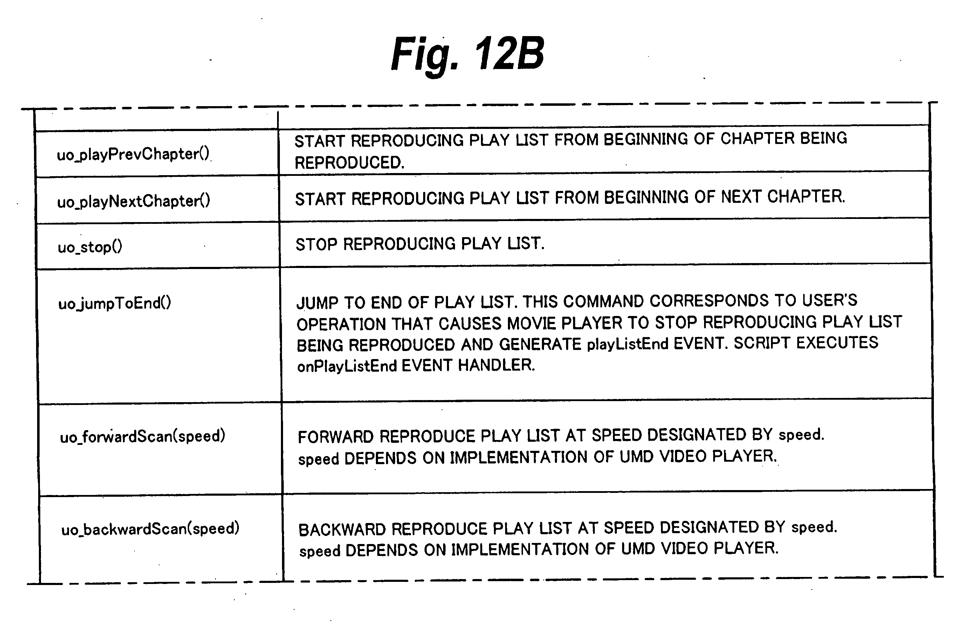

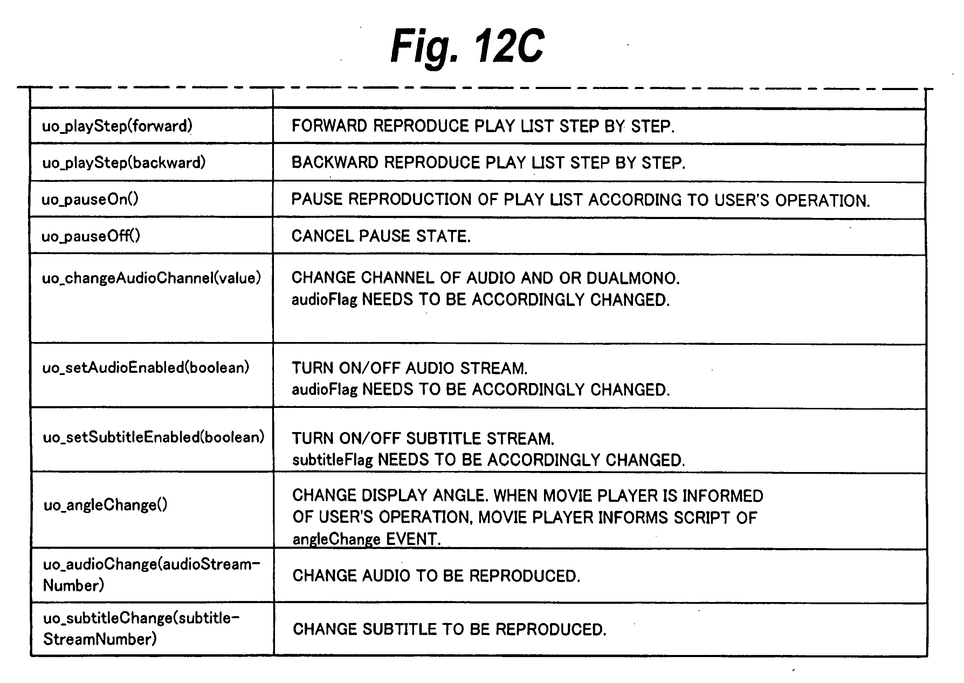

Since the functions of the key inputs shown in Fig. 10 are different in their roles from those of the key inputs shown in Fig. 11, the native implementation platform 301 needs to select destinations that are informed of the key inputs. As described above, key inputs shown in Fig. 10 designate the reproduction operations of video data, audio data, and subtitle data. When the native implementation platform 301 receives one of the key inputs shown in Fig. 10 as the user's input 310, the native implementation platform 301 converts the received key input into a command shown in Fig. 12A, Fig. 12B and Fig. 12C and informs the movie player 300 of the converted command.

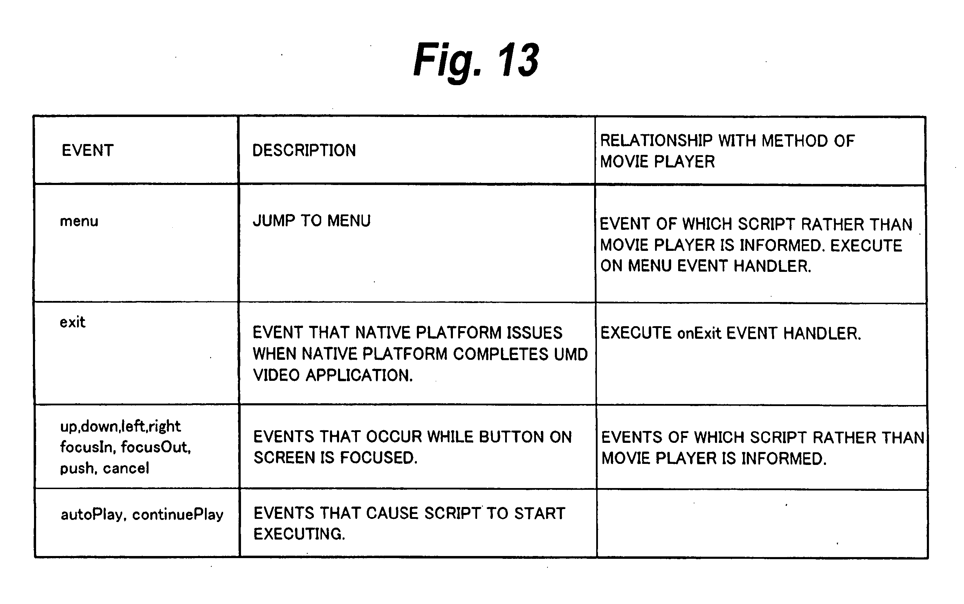

On the other hand, since the key inputs shown in Fig. 11 are the user's input 310 to the GUI, the script layer 302, which structures a screen and generates buttons, needs to be informed of these inputs. When the native implementation platform 301 receives one of key inputs shown in Fig. 11 as the user's input 310, the native implementation platform 301 converts the key input into the event 314 shown in Fig. 3 and informs the script layer 302 of the event 314. Fig. 13 shows examples of the key event 314 according to the key inputs.

Fig. 10 and Fig. 11 show also key inputs with respect to stream change operations such as key VIC_ANGLE, key VK_SUBTITLE, and key VK_AUDIO. These key inputs are key inputs that accomplish the same functions as stream change methods that the script program performs to the movie player 300.

Next, commands shown in Fig. 12A, Fig. 12B and Fig. 12C will be described in detail. Command uo_timeSearch(playListTime) designates the reproduction of a play list that is being reproduced from a designated time. Argument playListTime represents the time of the play list when the beginning of the play list is 0. Since this command does not designate a play list number, the time represented by argument playListTime is a designated time in the range of the play list being reproduced. Command uo_play() designates the start of the reproduction at a predetermined reproduction speed such as regular reproduction speed. The start position of the play list is decided according to the resume information 324. When there is no information corresponding to the resume information 324, the user's operation is invalidated. This command corresponds to the execution of method play() without the play list number designated. With this command, the user cannot designate a play list number.

Command uo_playChapter(chapterNumber) starts reproducing the play list being reproduced from a chapter designated by argument chapterNumber. Without the chapter number designated, this command starts reproducing the play list from the beginning of the chapter being reproduced. This command corresponds to method playChapter() without the chapter number designated. Command uo_playPrevChapter() starts reproducing the play list from the immediately previous chapter. Command uo_playNextChapter() starts reproducing the play list from the immediately next chapter. Command uo_stop() stops reproducing the play list.

Command uo_jumpToEnd() jumps to the end of the play list. This command corresponds to a user's operation that causes the movie player 300 to stop the reproduction and generate event playListEnd. According to this command, the script layer 302 executes event handler onPlayListEnd. Command uo_forwardScan(speed) forward reproduces the play list at a reproduction speed designated by argument speed. Command uo_backwardScan(speed) backward reproduces the play list at a reproduction speed designated by argument speed. Argument speed of these commands uo_forwardScan(speed) and uo_backwardScan(speed) depends on the implementation of the UMD video player.

Command uo_playStep(forward) forward reproduces the play list step by step. Command uo_playStep(backward) backward reproduces the play list step by step. Command uo_pauseOn() pauses the reproduction of the play list according to a user's operation. Command uo_pauseOff() cancels the pause state of the reproduction of the play list according to a user's operation.

Command uo_changeAudioChannel(value) changes the channel of audio data or one channel of dual monaural reproduction. When this command is executed, the value of flag audioFlag needs to be accordingly changed. Command uo_setAudioEnabled(Boolean) turns ON/OFF the audio stream. When this command is executed, the value of flag audioFlag needs to be accordingly changed. Command uo_setSubtitleEnabled(Boolean) turns ON/OFF the subtitle stream. When this command is executed, the value of flag subtitleFlag needs to be accordingly changed. Command uo_angleChange()changes the display angle. When the movie player 300 is informed of the user's operation for this command, the movie player 300 informs the script layer 302 of event angleChange. Command uo_audiochange(audioStreamNumber) changes the audio stream to be reproduced. Command uo_subtitleChange(subtitleStreamNumber) changes the subtitle stream to be reproduced.

Next, the relationship between events shown in Fig. 13 and methods of the movie player 300 will be described in detail. Event menu jumps to a menu. The native implementation platform 301 informs the script layer 302 rather than the movie player 300 of this event. When the script layer 302 receives event menu, the script layer 302 executes event handler onMenu. Event exit is an event that the native implementation platform 301 issues when it completes the UMD video application. When the script layer 302 receives event exit, the script layer 302 executes event handler onExit.

Event up, event down, event left, event right, event focusIn, event focusOut, event push, and event cancel are events that occur when button images as GUI parts on the screen are focused. The native implementation platform 301 informs the script layer 302 rather than the movie player 300 of these events. When a button image is focused, for example the cursor displayed on the screen represents the coordinates of the button image so that the button image can be selected. Event up, event down, event left, and event right occur when an up button image, a down button image, a left button image, and a right button image are focused, respectively. Event focusIn occurs when any button image is focused. Event focusOut occurs when any focused button image is defocused. Event push occurs when a press operation is performed for any focused button image. Event cancel occurs when a cancel operation is performed against the press operation for any button image.

Event autoPlay and event continuPlay are events that cause the script layer 302 to start executing a script. Event autoPlay is an event that causes a script to automatically start executing when a disc is loaded. Event continuePlay causes a script to resume executing from the position that the script was stopped according to for example the resume information 324 when a disc is loaded.

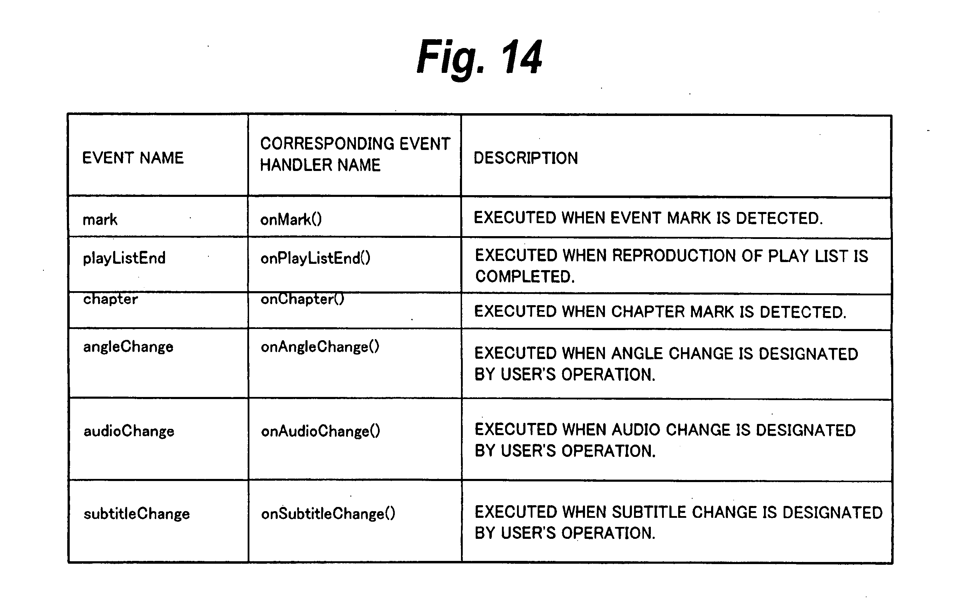

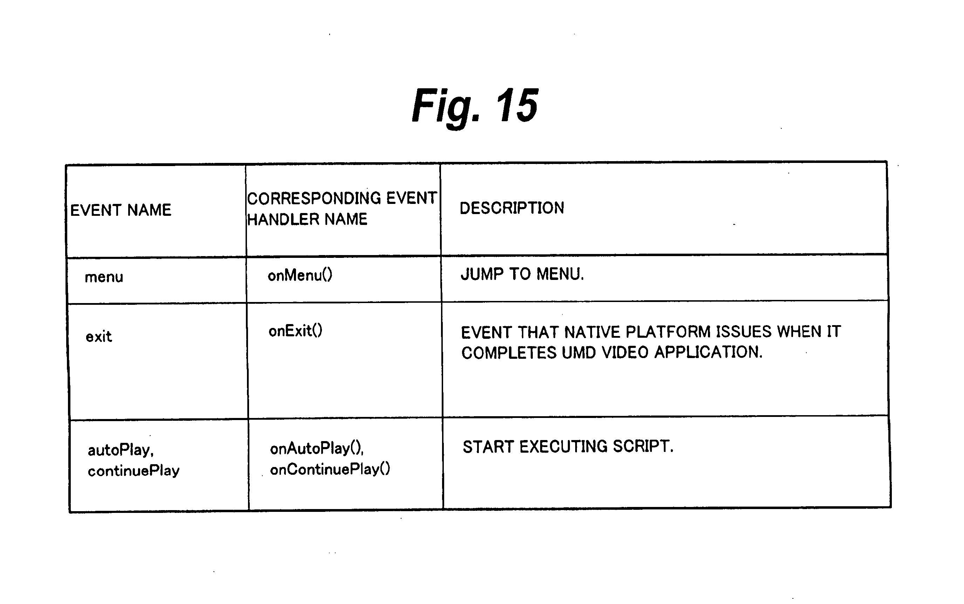

There are programs that are executed when events shown in Fig. 13 occur. These programs corresponding to the events are referred to as event handlers. Events and event handlers can be correlated using for example names. For example, event handler names are created by adding a prefix "on" to event names. Fig. 14 and Fig. 15 show examples of event handlers. When the content creator describes the contents of event handlers, the UMD video player can perform various operations that the content creator intends.

Fig. 14 shows examples of events that the movie player 300 has and corresponding event handlers. Events shown in Fig. 14 correspond to the event 312 shown in Fig. 3. The movie player 300 informs the script layer 302 of the events shown in Fig. 14. The event handlers are kinds of interfaces. The contents of the event handlers are implemented by the content creator using the script language. Since the event handlers have such a structure, when events occur, operations that the content creator intends can be accomplished.

Event mark and event handler onMark() are executed when an event mark is detected. An event mark is embedded in for example a play list. While the movie player 300 is reproducing the play list, the movie player 300 detects a play list from the play list. When the movie player 300 detects an event mark, the movie player 300 informs the script layer 302 of event mark. The script layer 302 executes event handler onMark() corresponding to event mark. Likewise, event playListEnd and event handler onPlayListEnd() are executed when the reproduction of a play list is completed. Event chapter and event handler onChapter() are executed when a chapter mark is detected. A chapter mark is embedded in for example a play list and detected by the movie player 300 while it is reproducing the play list.

Event angleChange and event handler onAngleChange() are executed when the angle change is designated by a user's operation. For example, when key input VK_ANGLE is input to the native implementation platform 301 by the user's operation as the user's input 310, the native implementation platform 301 converts the user's input 310 into command uo_angleChange() and supplies it to the movie player 300. The movie player 300 generates event angleChange corresponding to command uo_angleChange and supplies event angleChange to the script layer 302. The script layer 302 executes event handler onAngleChange() corresponding to event angleChange. Likewise, event audioChange and event handler onAudioChange() are executed when the audio change is designated by a user's operation. Event subtitleChange and event handler onSubtileChange() are executed when the subtitle change is designated by a user's operation.

Fig. 15 shows examples of event handlers that the system object has. The event handlers shown in Fig. 15 are event handlers that the native implementation platform 301 has in advance. The native implementation platform 301 informs the script layer 302 of the event handlers.

Event menu and event handler onMenu() jump to a menu. Event menu is an event of which the native implementation platform 301 informs the script layer 302 when the menu key is pressed by a user's operation. The script layer 302 receives the event, executes the corresponding event handler onMenu(), and arranges and displays GUI parts that compose a menu screen with event handler onMenu(). Event exit and event handler onExit() are an event and a corresponding event handler that the native implementation platform 301 generates when it completes the UMD video application.

When a user' operation or the like designates the completion of the operation of the UMD video player, the native implementation platform 301 informs the script layer 302 of event exit. When the script layer 302 receives event exit, the script performs an exit process with event handler onExit(). Event autoPlay, event handler onAutoPlay(), event continuePlay, and event handler onContinuePlay() start executing corresponding scripts.

Besides event handlers for the system object, there are event handlers for buttons. However, event handlers for buttons do not closely relate to the present invention, their description will be omitted.

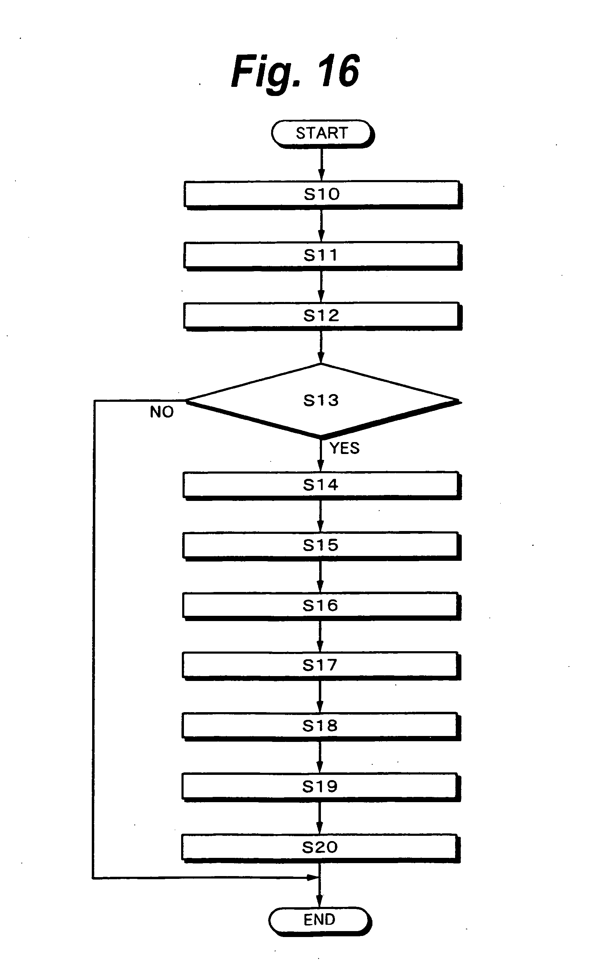

Next, with reference to a flow chart shown in Fig. 16, an example of a process that executes a provided program upon occurrence of a user's input event will be described in brief. Fig. 16 shows an example of which while the UMD video player is normally reproducing data from a disc, when the user presses the "next" key to cause the UMD video player to reproduce the next chapter, the UMD video player jumps to the next chapter according to the key input, starts reproducing the next chapter, and displays a prepared message on the screen.

While the UMD video player is normally reproducing data from the disc, when the user presses the key "next" on the remote control commander of the UMD video player (at step S10), key VK_NEXT is supplied as the user's input 310 to the native implementation platform 301. The native implementation platform 301 generates user command uo_playNextChapter() corresponding to the user's input 310 (at step S11). The native implementation platform 301 informs the movie player 300 of user command uo_playNextChapter().

When the movie player 300 receives command uo_playNextChapter(), the movie player 300 searches the database 320 for the position of the next chapter mark based on the current reproduction position corresponding to play list information (at step S12). At step S13, it is determined whether the next chapter mark exists. When the determined result represents that the next chapter mark does not exist, the movie player 300 does not perform the chapter jump operation, but continues the current reproduction operation.

In contrast, when the determined result at step S13 represents that the next chapter mark exists, the flow advances to step S14. At step S14, the movie player 300 stops the current reproduction operation and obtains the byte position of the next chapter mark in the clip AV stream file from feature point information of the clip information file of the database 320. At step S15, the movie player 300 accesses the obtained byte position of the file and starts reproducing the stream from the position.

After step S16, a process that displays a message that informs the user that the chapter was changed on the screen is performed. When the chapter is changed and the reproduction is started from the beginning of the chapter, event chapter occurs (at step S16). For example, the movie player 300 detects the chapter mark at the beginning of the chapter, event chapter occurs. The movie player 300 informs the script layer 302 of event chapter. In addition to the event, the movie player 300 also informs the script layer 302 of the chapter number of the chapter to be jumped. The script layer 302 starts executing an event handler corresponding to the informed event, for example event handler onChapter() (at step S17).

In this example, it is assumed that an operation that displays a message that represents that the chapter was changed on the screen is described in the event handler. A script of the script layer 302 executes the event handler, obtains the chapter number of which the movie player 300 informed the script layer 302 when the event occurred (at step S18), and causes the native implementation platform 301 to display a predetermined message that represents for example the beginning of the obtained chapter number on the screen. According to the command, the native implementation platform 301 displays the message on the screen (at step S19) and completes the process of the event handler (at step S20).

In the foregoing process, when the user operates the key "next" that causes the movie player 300 to start reproducing the next chapter, the movie player 300 performs the chapter jump operation and displays a message that represents the beginning of the chapter on the screen when the movie player 300 starts reproducing the next chapter to be jumped.

Thus, the user's input event causes the state of the movie player 300 to change. In addition, the user's input event causes a new event to occur. With new events, the movie player 300 can perform various processes.

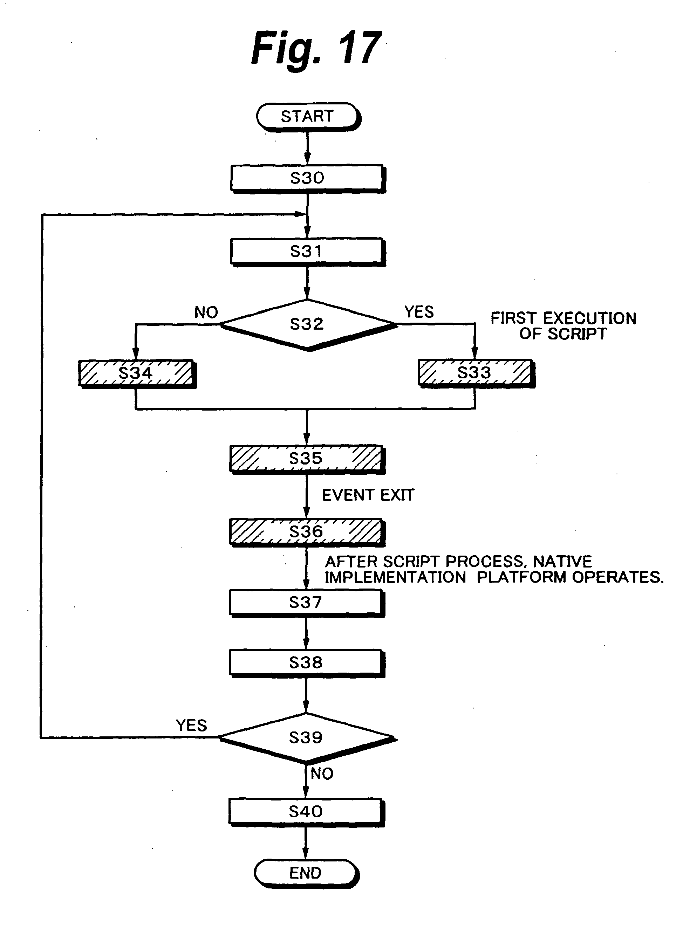

Fig. 17 shows a process after a disc is loaded into the UMD video player until the disc is ejected therefrom. In Fig. 17, hatched steps represent states in which a script is being executed.

When the user places the disc in a predetermined position of the UMD video player, it loads the disc according to a predetermined operation so that the UMD video player can reproduce video data from the disc (at step S30). When the disc is loaded, the native implementation platform 301 references the resume information 324 and loads continuous reproduction information corresponding to the disc from the resume information 324 (at step S31).

Thereafter, the resume information 324 corresponding to the disc is referenced. It is determined whether the continuous reproduction information exists (at step S32). When the continuous reproduction information exists, the native implementation platform 301 informs the script layer of event continuePlay. The script layer 302 executes event handler onContinuePlay corresponding to the informed event continuePlay (at step S33). When the determined result at step S32 represents that the continuous reproduction information corresponding to the disc does not exist, the flow advances to step S34. At step S34, the native implementation platform 301 informs the script layer 302 of event autoPlay. The script layer 302 executes event handler onAutoPlay corresponding to event autoPlay.

At step S35, the reproduction operation for the disc and other operations are preformed according to the contents of event handler onAutoPlay and event handler onContinuePlay. An event that occurs corresponding to the reproduction operation for the disc and an event handler corresponding to the event are executed.

When the native implementation platform 301 generates event exit, the flow advances to step S36. At step S36, the script layer 302 executes event handler onExit corresponding to event exit. Event handler onexit executes a process that completes the UMD video application. Event exit is generated by the native implementation platform 301 according to the user's input 310 as a predetermined operation on for example the remote control commander.

When the script process according to event handler onExit is completed, the native implementation platform 301 operates. At step S37, the movie player 300 executes a process that stops the reproduction operation. At this point, the state that exists immediately before the movie player 300 stops the reproduction operation is stored as continuous reproduction information in the resume information 324. The reproduction operation for the disc is completed (at step S38). When the reproduction operation for the same disc is not preformed (at step S39), the flow advances to step S40. At step S40, the native implementation platform 301 ejects the disc and completes the sequence of steps of the process. When the reproduction operation for the same disc is performed, the flow returns to step S31.

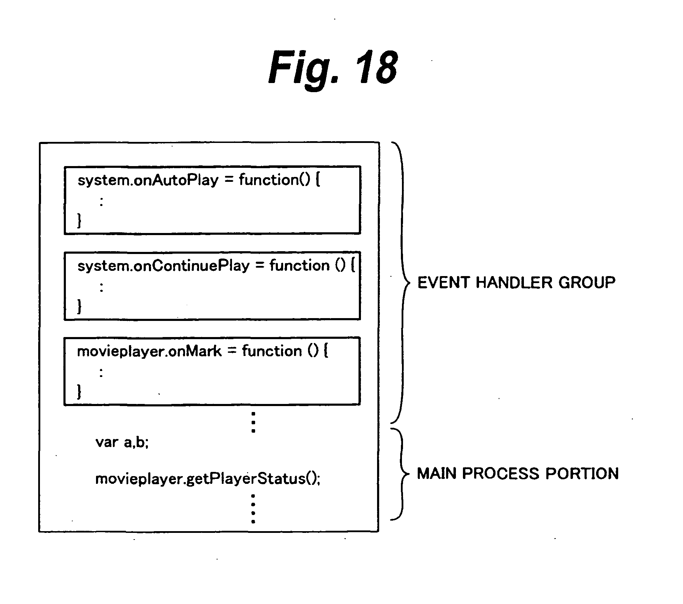

Fig. 18 shows an example of the structure of a script file. As shown in Fig. 2, a script file is file "SCRIPT.DAT" that composes the script layer 302. A script file is composed of an event handler group and a main process portion. The event handler group is composed of one or a plurality of event handlers. Whenever the script layer 302 is informed of occurrence of an event, an event handler corresponding to the informed event is retrieved and executed. The main process portion describes definitions of global variables used in event handlers. The main process portion is initially executed one time.

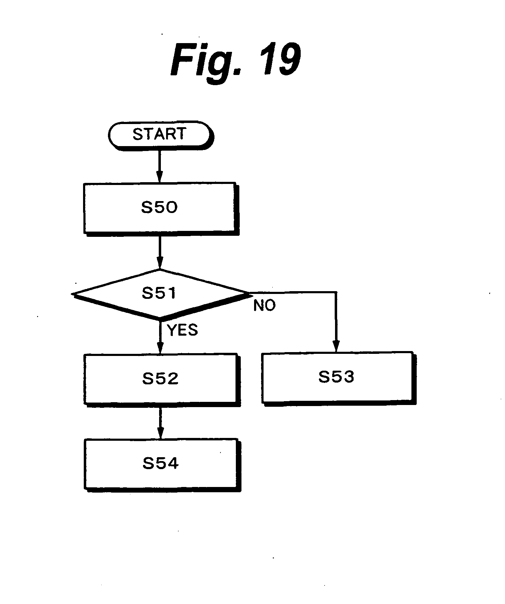

Fig. 19 shows an example of a procedure that executes event handler onAutoPlay(). When the user loads a disc into the UMD video player 300 and causes it to perform the reproduction operation for the disc from the beginning (at step S50), the movie player 300 performs this procedure. At step S51, the native implementation platform 301 determines whether the script contains event handler onAutoPlay(). When the script contains event handler onAutoPlay(), the native implementation platform 301 informs the script layer 302 of event autoPlay (at step S52). At step S54, the script layer 302 executes event handler onAutoPlay(). Thus, the movie player 300 automatically starts reproducing data from the loaded disc.

In contrast, when the determined result at step S51 represents that the script does not contain event handler onAutoPlay(), the flow advances to step S53. The native implementation platform 301 informs the script layer 302 of event exit. In this case, when the user operates the menu key for the reproduction operation on the menu screen implemented in the native implementation platform 301, the movie player 300 starts reproducing data from the disc. When the script layer 302 has event handler onExit(), the script layer 302 executes event handler onExit().

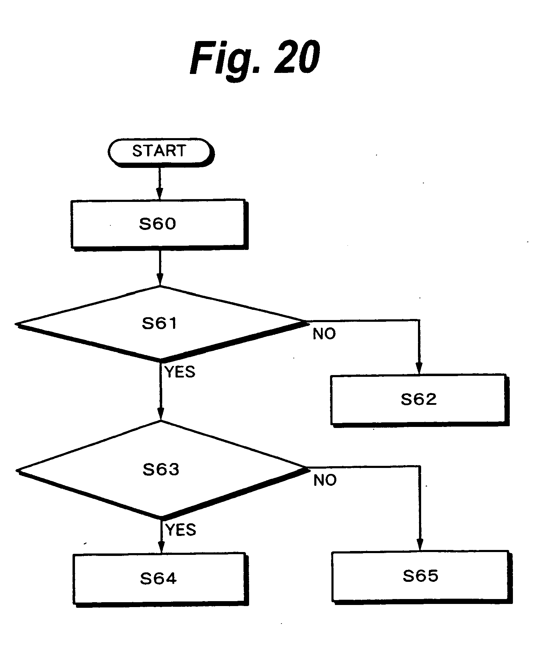

Fig. 20 shows an example of a procedure that executes event handler onContinuePlay(). When the user loads a disc into the UMD video player and causes the movie player 300 to perform the continuous reproduction operation (at step S60), the movie player 300 performs this procedure. At step S61, the native implementation platform 301 determines whether the resume information 324 corresponding to the loaded disc exists. When the resume information 324 does not exist, the flow advances to step S62. At step S62, the movie player 300 performs the reproduction operation for the disc from the beginning.

When the resume information 324 corresponding to the loaded disc exists, the flow advances to step S63. At step S63, the native implementation platform 301 determines whether the script contains event handler onGontinuePlay(). When the script contains event handler onContinuePlay(), the native implementation platform 301 informs the script layer 302 of event handler onContinuePlay(). Accordingly, the script layer 302 executes event handler onContinuePlay() (at step S64). Thus, the movie player 300 resumes the reproduction for the loaded disc according to event handler onContinuePlay().

In contrast, when the determined result at step S63 represents that the script does not contain event handler onContinuePlay(), the flow advances to step S65. At step S65, the native implementation platform 301 executes default event handler onContinuePlay(). The default event handler onContinuePlay() simply starts the reproduction operation from the last reproduction end position according to for example the resume information 324.

User interfaces of event handler onAutoPlay and event handler onContinuePlay are not limited to those examples. Instead, various methods may be used. For example, in Fig. 20, at step S60, after the user causes the movie player 300 to perform the continuous reproduction operation, the native implementation platform 301 determines whether the resume information 324 corresponding to the loaded disc exists. Instead, inversely, first, the native implementation platform 301 may determine whether the resume information 324 corresponding to the loaded disc exists. When the resume information 324 exists, the native implementation platform 301 may ask the user whether to perform the continuous reproduction operation.

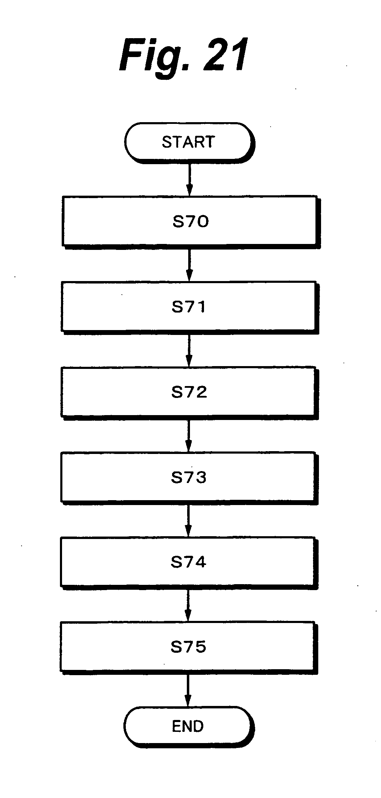

Fig. 21 shows an example of a process preformed upon completion of the reproduction operation. While the movie player 300 is performing the reproduction operation for a disc, when the user causes the movie player 300 to stop the reproduction operation (at step S70), the movie player 300 performs this process. When the user's input 310 that causes the movie player 300 to stop the reproduction operation is input to the native implementation platform 301, it starts an exit process (at step S71). The exit process is composed of for example the following three steps:
(1) restrains new events from occurring,
(2) discards event handlers that have been queued, and
(3) issues control command uo_stop() to the movie player 300.

The native implementation platform 301 executes the exit process at step S71. After the native implementation platform 301 stops the execution of the current event handler (at step S72), the flow advances to step S73. At step S73, the native implementation platform 301 informs the script layer 302 of event exit. Accordingly, the script layer 302 executes onExit() (at step S74). Event handler onExit() executes for example a predetermined post process performed upon completion of the reproduction operation and method setUserData that stores user's setting data.

At step S75, the native implementation platform 301 performs the exit process. In the exit process, the native implementation platform 301 stores continuous information to for example a nonvolatile memory (namely, a backup of the state that exists immediately before the reproduction operation is completed to the resume information 324) and causes the system menu to appear on the screen.

The player model can reproduce video data, audio data, and subtitle data. Since events that the content creator intended occur at reproduction times that he or she intended and corresponding event handlers that he or she intended are executed, operations that he or she intended can be accomplished. In addition, when the user operates the UMD video player that is performing the reproduction operation for a disc, the native implementation platform 301 informs the movie player 300 of a command corresponding to the user's operation so that the state of the player is changed to the state that the user intended. In addition, the native implementation platform 301 informs the script layer 302 of an event corresponding to the user's input. As a result, the script layer 302 can accomplish the operations that the content creator intended corresponding to user's operations. When the player model has this structure, the user can interactively operate the video player to reproduce video data, audio data, and subtitle data.

### 5. Example of script program

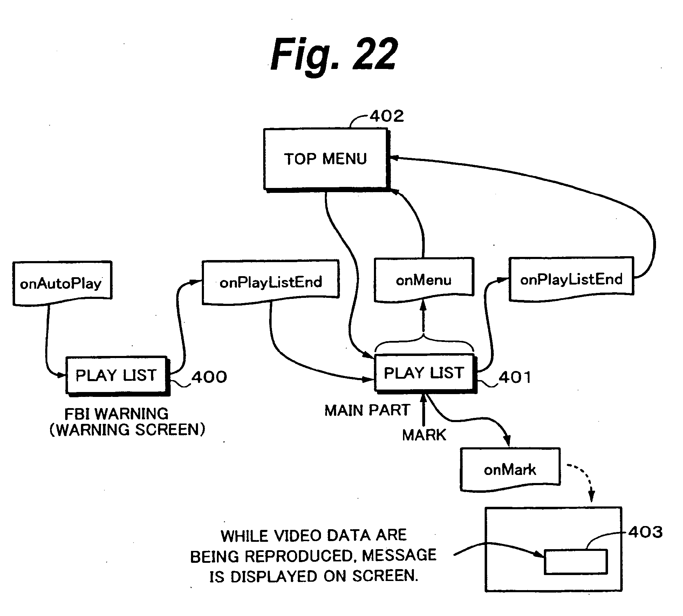

Next, an example of a script program of the script layer 302 will be described. It is assumed that the content creator created a flow of content reproduction as shown in Fig. 22. The content shown in Fig. 22 has as display elements play lists 400 and 401, a top menu 402, and a message 403. The play list 400 is used to display a warning message that is automatically displayed when a disc is loaded. The play list 401 is a main part of a movie as an example of the content. The top menu 402 has GUI parts such as buttons with which the user causes the play list 401 to be reproduced. The message 403 is displayed at any reproduction time of the play list 401.

In addition, in the structure shown in Fig. 22, several event handlers are provided. When a disc is loaded into the UMD video player, event handler onAutoPlay() automatically reproduces the play list 400 from the disc and displays a warning message on the screen. Event handler onPlayListEnd() is an event handler that is called when the reproduction of the play list is completed. In the example shown in Fig. 22, when the reproduction of the play list 400 and the play list 401 is completed, event handler onPlayListEnd() is called. In other words, event handler onPlayListEnd() determines what play list's reproduction is completed. When the reproduction of the play list 400 is completed, event handler onPlayListEnd() starts the reproduction of the play list 401. When the reproduction of the play list 401 is completed, event handler onPlayListEnd calls the top menu 402.

Event handler onMenu() is called when the user operates the menu key. Event handler onMenu() calls the top menu 402 and displays it on the screen. Event handler onMark() is executed when a reproduction time designated by mark Mark elapsed. In the example shown in Fig. 22, mark Mark is set in the play list 401. When the play list 401 is reproduced and the reproduction time designated by mark Mark elapses, the message 403 is displayed on the screen.

In the example shown in Fig. 22, when the disc is loaded into the UMD video player, event handler onAutoPlay is called. Event handler onAutoPlay reproduces the play list 400 and displays a warning message. After the reproduction time of the play list 400 has elapsed, at the end of the play list 400, event handler onPlayListEnd is called. Event handler onPlayListEnd determines that the play list 400 has been completely reproduced and reproduces the next play list 401. When the user operates the menu key while the play list 401 is being reproduced, event handler onMenu is called. Event handler onMenu displays the top menu 402 on the screen. Event handler onMenu starts reproducing the play list 401 from the beginning corresponding to a predetermined operation on the top menu 402. When the reproduction time of the play list 401 has elapsed for the time designated by mark Mark, event handler onMark is called. Event handler onMark displays the message 403 on the screen. When the play list 401 has been completely reproduced, event handler onPlayListEnd is called. Event handler determines that the play list 401 has been completely reproduced and displays the top menu 402 on the screen.

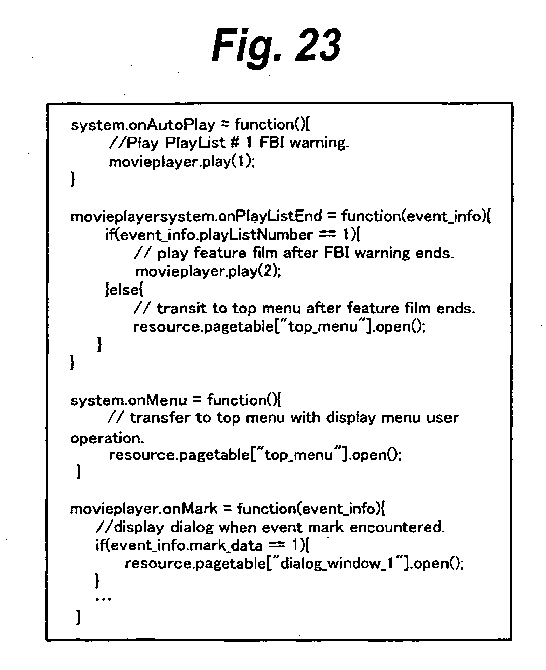

Fig. 23 shows an example of a script program that accomplishes the operation shown in Fig. 22. As described above, the script program has event handlers and executes them upon occurrence of corresponding events. The script program is stored in file "SCRIPT.DAT" that will be described later.

Method "movieplayer.play()" causes the movie player 300 to reproduce a play list. A play list number to be reproduced is described in parentheses () as an argument. When the play list has been reproduced, event playListEnd occurs. When event playListEnd occurs, the script calls event handler movieplayer.onPlayListEnd(). At this point, in addition to event playListEnd, object event_info is supplied to the script. The play list number of the play list that has been completely reproduced and so forth are stored in object event_info. The script can change the next operation corresponding to the content of object event_info.

### 6. File management structure

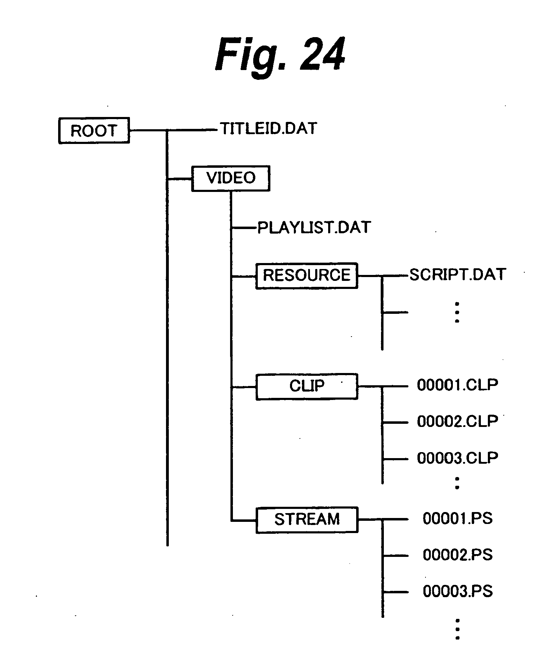

Next, with reference to Fig. 24, the file management structure according to the UMD video standard will be described. Files are hierarchically managed in a directory structure and recorded on a disc. A disc file system standardized by International Organization for Standardization (ISO) 9660 or Universal Disk Format (UDF) may be used.

File "TITLEID.DAT" and directory "VIDEO" are placed under the root directory. Directory "RESOURCE," directory "CLIP," directory "STREAM," and file "PLAYLIST.DAT" are placed under directory "VIDEO."

File "TITLEID.DAT" is a file that stores a title identifier that differs in each title (type of content). One disk has one file "TITLEID.DAT."

File "SCRIPT.DAT" is placed under directory "RESOURCE." As described above, file "SCRIPT.DAT" stores a script program that composes the script layer 302. Normally, file "SCRIPT.DAT" as one file is placed under directory "RESOURCE." Instead, a plurality of files "SCRIPT.DAT" may be placed under directory "RESOURCE." In this case, parts of the file names are changed so that they become unique. A plurality of files "SCRIPT.DAT" are used for different display languages. In this case, however, one file "SCRIPT.DAT" is used at a time.

At least one clip information file is placed under directory "CLIP." A clip information file has a file name composed of a character string portion having several to five characters such as "00001" (in this example, numerals), a period as a delimiter, and an extension portion such as "CLP." Extension portion "CLP" represents that the file is a clip information file.

At least one clip AV stream file is placed under directory "STREAM." A clip AV stream file has a file name composed of a character string portion having several to five characters such as "00001" (in this example, numerals), a period as a delimiter, and an extension portion such as "PS." Extension portion "PS" represents that the file is a clip AV stream file. As described herein, a clip AV stream file is an MPEG2 (Moving Pictures Experts Group 2) program stream of which a video stream, an audio stream, and a subtitle stream are multiplexed and stored in a file identified by extension portion "PS."

As described above, a clip AV stream file is a file of which video data and audio data are compression-encoded and time-division multiplexed. Thus, when the clip AV stream file is read and decoded, video data and audio data are obtained. A clip information file is a file that describes the characteristics of a clip AV stream file. Thus, a clip information file and a clip AV stream file are correlated. As described herein, since the character string portions having several to five characters of the file names of the clip information file and the clip AV stream file are the same, the relationship therebetween can be easily obtained.

File "SCRIPT.DAT" is a script file that describes a script program. File "SCRIPT.DAT" stores a program that causes reproduction states for a disc to be interactively changed. File "SCRIPT.DAT" is read before other files are read from the disc.

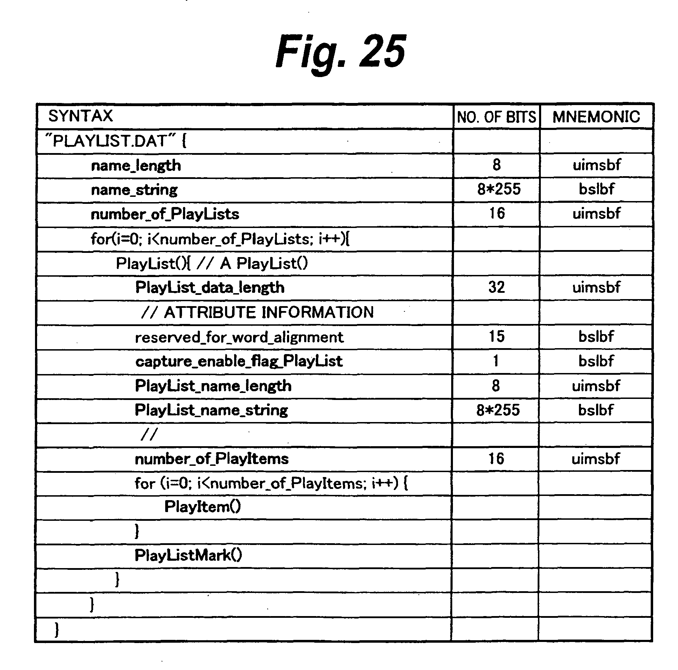

File "PLAYLIST.DAT" is a play list file that describes a play list that designates the reproduction order of a clip AV stream. Next, with reference to Fig. 25 to Fig. 27, the internal structure of file "PLAYLIST.DAT" will be described. Fig. 25 shows an example of syntax that represents the entire structure of file "PLAYLIST.DAT." In this example, the syntax is described in the C language, which is used as a descriptive language for programs of computer devices. This applies to tables that represent other syntaxes.

Field name_length has a data length of 8 bits and represents the length of the name assigned to the play list file. Field name_string has a data length of 255 bytes and represents the name assigned to the play list file. In field name_string, the area from the beginning for the byte length represented by field name_length is used as a valid name. When the value of field "name_length" is "10," 10 bytes from the beginning of field name_string is interpreted as a valid name.

Field number_of_PlayList has a data length of 16 bits and represents the number of blocks PlayList() that follow. Field number_of_PlayLists is followed by a for loop. The for loop describes blocks PlayList() corresponding to field number_of_PlayLists. Block PlayList() is a play list itself.

Next, an example of the internal structure of block PlayList() will be described. Block PlayList() starts with field PlayList_data_length. Field PlayList_data_length has a data length of 32 bits and represents the data length of block PlayList(), including field PlayList_data_length. Field PlayList data_length is followed by field reserved_for_word_alignment having a data length of 15 bits and flag capture_enable_flag_PlayList having a data length of 1 bit. Field reserved_for_word_alignment and flag capture_enable_flag_PlayList having a data length of 1 bit align data at a 16-bit position in block PlayList().

Flag capture_enable_flag_PlayList is a flag that represents whether a moving picture that belongs to block PlayList() including flag capture_enable_flag_PlayList is permitted to be secondarily used. When the value of flag capture_enable_flag_PlayList is for example "1," it represents that the moving picture that belongs to PlayList() is permitted to be secondarily used in the player.

In the foregoing example, flag capture_enable_flag_PlayList has a data length of 1 bit. Instead, flag capture_enable_flag_PlayList may have a data length of a plurality of bits that describe a plurality of secondary use permission levels. For example, flag capture_enable_flag_PlayList may have a data length of 2 bits. In this case, when the value of the flag is "0," the movie picture may not be perfectly prohibited from being secondarily used. When the value of the flag is "1," the movie picture may be permitted to be secondarily used in the case that the movie picture is compression-encoded with a predetermined resolution or lower such as 64 pixels x 64 lines. When the value of the flag is "2," the moving picture may be perfectly permitted to be secondarily used without any restriction. Instead, when the value of bit 0 of the flag is "0," the moving picture may be permitted to be secondarily used in the content reproduction application. When the value of bit 1 of the flag is "1," the moving picture may be permitted to be secondarily used in another application (for example, wall paper image or a screen saver) in the movie player. In this case, the values of bits 0 and 1 of the flag may be used in combination.

Field PlayList_name_length has a data length of 8 bits and represents the length of the name assigned to block PlayList(). Field PlayList_name_string has a data length of 255 bits and represents the name assigned to block PlayList(). In Field PlayList_name_string, the area from the beginning for the byte length represented by field PlayList_name_string is used as a valid name.

Field number_of_PlayItems has a data length of 16 bits and represents the number of blocks PlayItem() that follow. Field number_of_PlayItems is followed by a for loop. The for loop describes blocks PlayItem() corresponding to field number_of_PlayItems. Block PlayItem() is a play item itself.

Blocks PlayItem() of block PlayList are assigned identification information (ID). For example, block PlayItem() described at the beginning of block PlayList() is assigned for example 0. Blocks PlayItem() are assigned serial numbers in the order of appearance such as 1, 2, and so forth. The serial numbers are used as identification information of blocks PlayItem(). Argument i of the for loop repeated for blocks PlayItem() can be used as identification information for blocks PlayItem(). Block PlayItem() is followed by block PlayListMark().

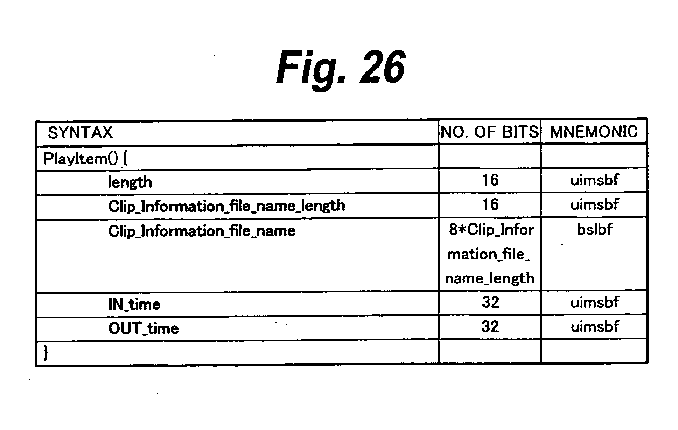

Next, with reference to Fig. 26, an example of the internal structure of block PlayItem() will be described. Block PlayItem() starts with field length. Field length has a data length of 16 bits and represents the length of block PlayItem(). Field length is followed by field Clip_Information_file_name_length. Field Clip_Information_file_name_length has a data length of 16 bits and represents the length of the name of the clip information file corresponding to block PlayItem(). Field Clip_Information_file_name has a variable data length in bytes and represents the name of the clip information file corresponding to block PlayItem(). In field Clip_Information_file_name, the area from the beginning for the byte length represented by field Clip_Information_file_name is used as a valid name. When a clip information file is designated by field Clip_Information_file_name, a clip AV stream file corresponding to the clip information file can be identified according to the above-described relationship of the file names.

Field IN_time and field OUT_time have a data length of 32 bits each. Field IN_time and field OUT_time are time information that designate the reproduction start position and the reproduction end position of a clip AV stream file corresponding to the clip information file designated by field Clip_Information_file_name in block PlayItem(). With field IN_time and field OUT_time, the reproduction start position other than the beginning of the clip AV stream file can be designated. Likewise, with field IN_time and field OUT_time, the reproduction end position other than the end of the clip AV stream file can be designated.

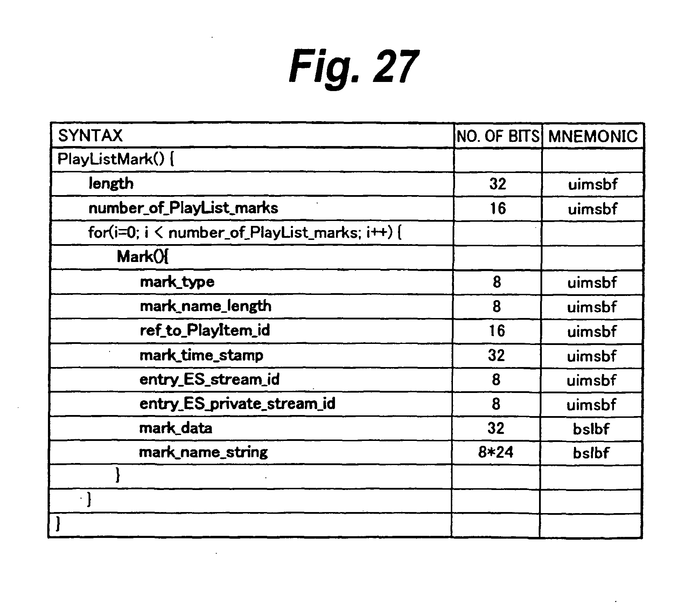

Next, with reference to Fig. 27, an example of the internal structure of block PlayListMark() will be described. Block PlayListMark() starts with field length. Field length has a data length of 32 bits and represents the length of block PlayListMark(). Field length is followed by field number_of_PlayList_marks. Field number_of_PlayList_marks has a data length of 16 bits and represents the number of blocks Mark(). Field number_of_PlayList_marks is followed by a for loop. The for loop describes blocks Mark() corresponding to field number_of_PlayList_marks.

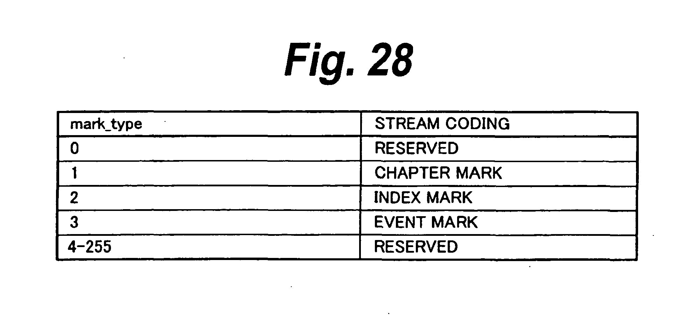

Next, an example of the internal structure of block Mark() will be described. Block Mark() starts with field mark_type. Field mark_type has a data length of 8 bits and represents the type of block Mark() including field mark_type. As shown in Fig. 28, three types of marks, a chapter mark, an index mark, and an event mark are defined. A chapter is a search unit that divides a play list (block PlayList()). An index is a search unit that divides a chapter. A chapter mark and an index mark respectively represent a chapter position and an index position as time information. An event mark is a mark that cause an event to occur.

Field mark_name_length has a data length of 8 bits and represents the length of the name assigned to block Mark(). Field mark_name_string at the last line of block Mark() represents the name assigned to block Mark(). In field mark_name_string, the area from the beginning for the byte length represented by field mark_name_length is used as a valid name.

Four elements of field ref_to_PlayItem_id, field mark_time_stamp, field entry_ES_stream_id, and field entry_ES_private_stream_id correlate block Mark() defined in block PlayList() with a clip AV stream file. In other words, field ref_to_PlayItem_id has a data length of 16 bits and represents identification information of block PlayItem(). Thus, field ref_to_PlayItem_id identifies a clip information file and a clip AV stream file.

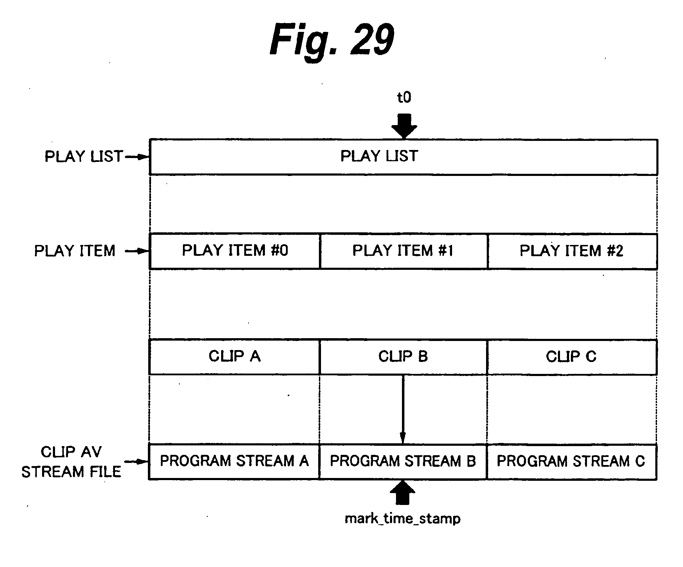

Field mark_time_stamp has a data length of 32 bits and designates the time of a mark in a clip AV stream file. Next, with reference to Fig. 29, field mark_time_stamp will be described in brief. In Fig. 29, a play list is composed of three play items assigned 0, 1, and 2 (PlayItem(#0), PlayItem(#1), and PlayItem(#2)). Time to of the play list is included in play item 1 (PlayItem(#1)). Play items 0, 1, and 2 correspond to program streams A, B, and C of clip AV stream files through clip information files, respectively.

In this case, when a mark is designated to time to of the play list, the value of field ref_to_PlayItem_id is "1" that represents play item 1 including time to. In addition, time corresponding to time to in the corresponding clip AV stream file is described in field mark_time_stamp.

Returning to the description of Fig. 27, field mark_time_stamp is followed by field entry_ES_stream_id and field entry_ES_private_stream_id. Field entry_ES_stream_id and field entry_ES_private_stream_id have a data length of 8 bits each. When block Mark() is correlated with a predetermined elementary stream, field entry_ES_stream_id and field entry_ES_private_stream_id identify the elementary stream. Field entry_ES_stream_id and field entry_ES_private_stream_id represent a stream ID (stream_id) of packets (packet()) in which elementary streams are multiplexed and a private stream ID (private_stream_id) of a private packet header (private_packet_header()), respectively.

The stream ID (stream_id) of the packets (packet()) and the private stream ID (private_stream_id) of the private packet header (private_packet_header()) are based on provisions on a program stream of the MPEG2 system.

Field entry_ES_stream_id and field entry_ES_private_stream_id are used when the chapter structure of clip AV stream #0 is different from that of clip AV stream #1. When block Mark() is not correlated with a predetermined elementary stream, the values of these two fields are "0."

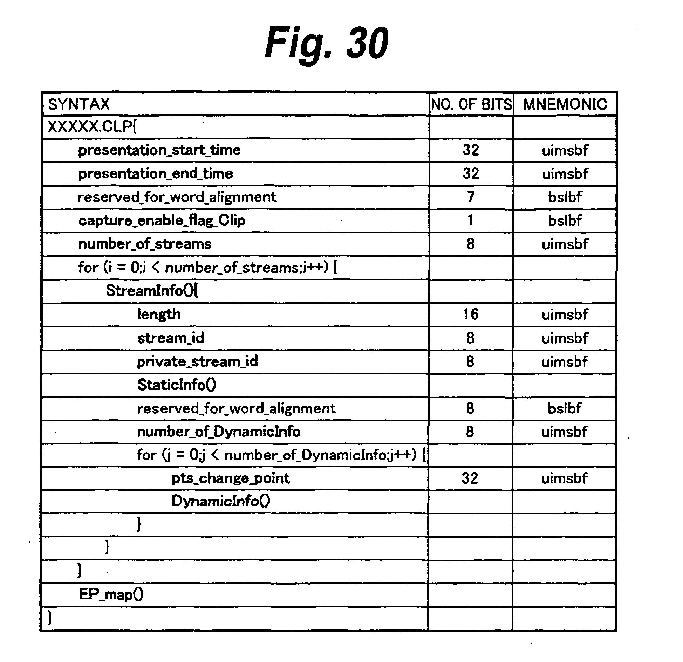

Next, with reference to Fig. 30 to Fig. 34, the internal structure of a clip information file will be described. As described above, clip information file "XXXXX.CLP" describes the characteristics and so forth of corresponding clip AV stream file "XXXXX.PS" placed under directory "STREAM."

Fig. 30 shows an example of syntax that represents the entire structure of clip AV stream file "XXXXX.CLP." Clip AV stream file "XXXXX.CLP" starts with field presentation_start_time and field presentation_end_time. Field presentation_start_time and field presentation_end_time have a data length of 32 bits each and represent the times of the beginning and end of the corresponding clip AV stream file. As time information, the presentation time stamp (PTS) of the MPEG2 system may be used. PTS has an accuracy of 90 kHz.

Field presentation_start_time and field presentation_end_time are followed by field reserved_for_word_alignment that has a data length of 7 bits and flag capture_enable_flag_Clip that has a data length of 1 bits. Field reserved_for_word_alignment and flag capture_enable_flag_Clip having a data length of 1 bit align data at a 16-bit position in file "XXXXX.CLP." Flag capture_enable_flag_Clip is a flag that represents whether a moving picture contained in a clip AV stream file corresponding to file "XXXXX.CLP" is permitted to be secondarily used. For example, when the value of flag capture_enable_flag_Clip is for example "1," it represents that the moving picture of the clip AV stream file corresponding to file "XXXXX.CLP" is permitted to be secondarily used in the video player.

Field number_of_streams has a data length of 8 bits and represents the number of blocks StreamInfo() that follow. Field number_of_streams is followed by a for loop. The for loop describes blocks StreamInfo() corresponding to field number_of_streams. The for loop is followed by block EP_map().

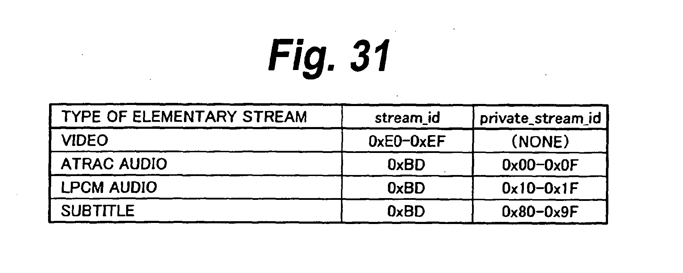

Next, an example of the internal structure of block StreamInfo() will be described. Block StreamInfo() starts with field length. Field length has a data length of 16 bits and represents the length of block StreamInfo(). Field length is followed by field stream_id and field private_stream that have a data length of 8 bits each. As shown in Fig. 31, block StreamInfo() is correlated with elementary streams. In the example shown in Fig. 31, when the value of field stream_id of block StreamInfo() is in the range from "0xE0" to "0xEF," block StreamInfo() is correlated with a video stream. When the value of field stream_id of block StreamInfo() is "0xBD," block StreamInfo() is correlated with an Adaptive Transform Acoustic Coding (ATRAC) audio stream, a Linear Pulse Code Modulation (LPCM) audio stream, or a subtitle stream. When the value of field private_stream_id of block StreamInfo() is in the range from "0x00" to "0x0F," from "0x10" to "0x1F," and from "0x80" to "0x9F," block StreamInfo() is correlated with an ATRAC audio stream, an LPCM audio stream, and a subtitle stream, respectively.

In Fig. 31, "0x" represents hexadecimal notation. This notation applies to the following description.

Block StreamInfo() mainly describes two types of information, the first type not varying in a stream, the second type varying in a stream. Information that does not vary in a stream is described in block StaticInfo(), whereas information that varies in a stream is described in block DynamicInfo() with change points designated with time information.

Block StaticInfo() is followed by field reserved_for_word_alignment that has a data length of 8 bits. Field reserved_for_word_alignment aligns data in a byte in block StreamInfo(). Field reserved_for_word_alignment is followed by field number_of_DynamicInfo. Field number_of_DynamicInfo has a data length of 8 bits and represents the number of blocks DynamicInfo() that follow. Field number_of_DynamicInfo is followed by a for loop. The for loop describes fields pts_change_point and blocks DynamicInfo() corresponding to field number_of_DynamicInfo.

Field pts_change_point has a data length of 32 bits and represents a time at which information of block DynamicInfo() becomes valid with PTS. A time at which each stream starts is represented by field pts_change_point and equal to field presentation_start_time defined in file "XXXXX.CLP."

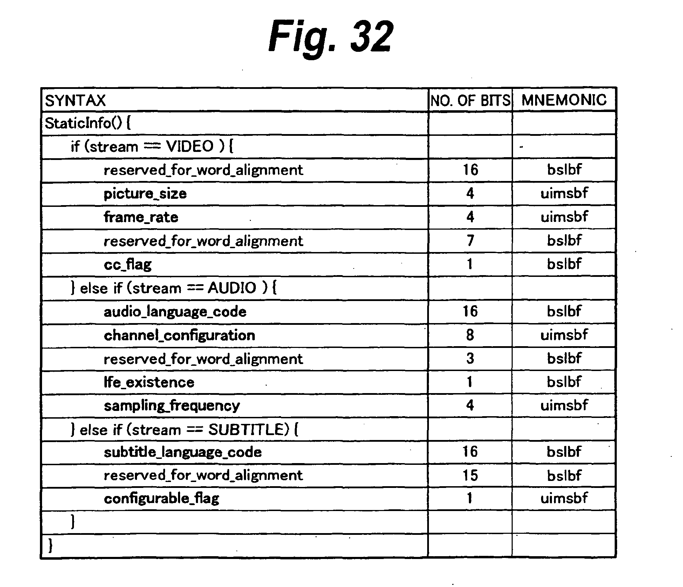

Next, with reference to Fig. 32, an example of the internal structure of block StaticInfo() will be described. The content of block StaticInfo() depends on the type of the corresponding elementary stream. The type of the corresponding elementary stream can be identified by the values of field stream_id and field private_stream_id as shown in Fig. 31. Fig. 32 shows block StaticInfo() whose content varies depending on the type of an elementary stream, which is a video stream, an audio stream, or a subtitle using an if statement. Next, block StaticInfo() will be described according to the types of elementary streams.

When the elementary stream is a video stream, block StaticInfo() is composed of field picture_size, field frame_rate, and flag cc_flag. Field picture_size and field frame_rate each have a data length of 4 bits each. Flag cc_flag has a data length of 1 bit. Field picture_size and field frame_rate represent the picture size and the frame frequency of the video stream. Flag cc_flag represents whether the video stream contains a closed caption. When the value of flag cc_flag is for example "1," the video stream contains a closed caption. Field reserved_for_word_alignment aligns data in 16 bits.

When the elementary stream is an audio stream, block StaticInfo() is composed of field audio_language_code having a data length of 16 bits, field channel_configuration having a data length of 8 bits, flag lfe_existance having a data length of 1 bit, and field sampling_frequency having a data length of 4 bits. Field audio_language_code represents a language code contained in the audio stream. Field channel_configuration represents a channel attribute of audio data such as monaural, stereo, multi-channel, or the like. Field lfe_existance represents whether the audio stream contains a low frequency emphasis channel. When the value of field 1fe_existance is for example "1," the audio stream contains the low frequency emphasis channel. Field sampling_frequency represents the sampling frequency of audio data. Field reserved_for_word_alignment is aligned at a 16-bit position.

When the elementary stream is a subtitle stream, block StaticInfo() is composed of field subtitle_language_code having a data length of 16 bits and flag configurable_flag having a data length of 1 bit. Field subtitle_language_code represents a language code contained in the subtitle stream. Flag configurable_flag represents whether the size and position of characters of the subtitle stream that is displayed are permitted to be changed. When the value of flag configurable_flag is for example "1," it represents that the size and position of characters of the subtitle stream that is displayed are permitted to be changed. Field reserved_for_word_alignment is aligned at a 16-bit position.

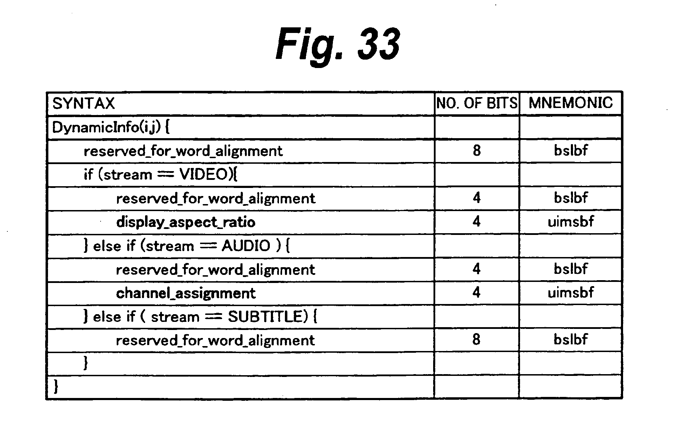

Next, with reference to Fig. 33, an example of the internal structure of block DynamicInfo() will be described. Block DynamicInfo() starts with field reserved_for_word_alignment having a data length of 8 bits. Elements preceded by field reserved_for_word_alignment depend on the type of the elementary stream. The type of the elementary stream can be identified by field stream_id and field private_stream_id described in Fig. 31. In Fig. 33, block DynamicInfo() whose content varies depending on the type of an elementary stream, which is a video stream, an audio stream, or a subtitle using an if statement. Next, block DynamicInfo() will be described according to the type of elementary streams.

When the elementary stream is a video stream, block DynamicInfo() is composed of field display_aspect_ratio having a data length of 4 bits. Field display_aspect_ratio represents whether the display output aspect ratio of video data is 16 : 9 or 4 : 3. Field reserved_for_word_alignment aligns data in 16 bits.

When the elementary stream is an audio stream, block DynamicInfo() is composed of field channel_assignment having a data length of 4 bits. When the audio stream is composed of two channels, field channel_assignment represents whether the output is a stereo or a dual monaural. The dual monaural is used to reproduce audio data for example in two languages. Field reserved_for_word_alignment aligns data in 16 bits.

When the elementary stream is a subtitle stream, block DynamicInfo() is composed of field reserved_for_word_alignment. Field reserved_for_word_alignment aligns data in 16 bits. In other words, with respect to a subtitle stream, block DynamicInfo() does not define an attribute that dynamically varies.

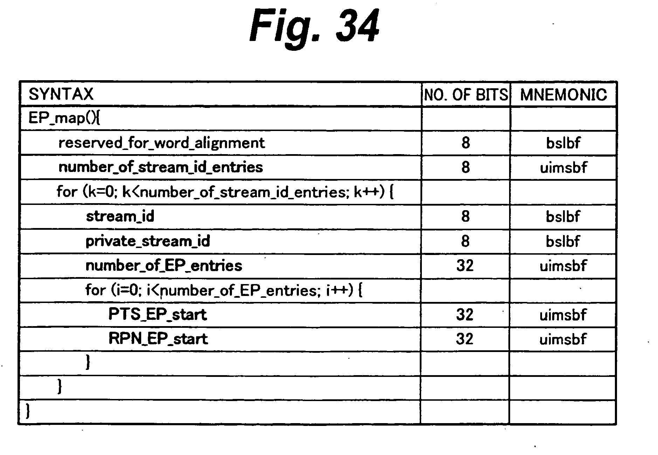

Next, with reference to Fig. 34, an example of the internal structure of block EP_map() will be described. Block EP_map() represents a valid decode start position (entry point) of a bit stream of each elementary stream with time information and position information. The position information may be the minimum access unit for a recording medium on which an elementary stream is recorded. Each elementary stream can be decoded from the position represented by block EP_map().

Since the valid decode start position of a fixed rate stream can be calculated, information such as block EP_map() is not necessary. On the other hand, for a variable rate stream and a stream whose data size varies in each access unit such as a stream according to the MPEG video compression-encoding system, block EP_map() is information necessary for randomly accessing data.

Block EP_map() starts with field reserved_for_word_alignment having a data length of 8 bits. Field reserved_for_word_alignment aligns data in 16 bits. Field reserved_for_word_alignment is followed by field number_of_stream_id_entries. Field number of_stream_id entries has a data length of 8 bits and represents the number of elementary streams described in block EP_map(). A first for loop describes fields stream_id, fields private_stream_id, and fields number_of_EP_entries corresponding to field number_of_stream_id entries. In the first for loop, a second for loop describes fields PTS_EP_start and fields RPN_EP_start corresponding to field number_of_EP_entries.

The first for loop describes field stream_id and field private_stream_id that have a data length of 8 bits each and identify the type of the elementary stream as shown in Fig. 31. Field stream_id and field private_stream_id are followed by field number_of_EP_entries. Field number_of_EP_entries has a data length of 32 bits and represents the number of entry points described in the elementary stream. The second for loop describes fields PTS_EP_start and fields RPN_EP_start corresponding to field number_of_EP_entries.

Field PTS_EP_start and field RPN_EP_start have a data length of 32 bits each and represent entry points themselves. Field PTS_EP_start represents a time of an entry point in a clip AV stream file with PTS. On the other hand, field RPN_EP_start represents the position of an entry point in a clip AV stream file in the unit of 2048 bytes.

As described herein, one sector as a disc access unit is 2048 bytes. Thus, field RPN_EP_start represents the position of an entry point of a clip AV stream file in sectors.

The valid reproduction start position of a video stream needs to be immediately preceded by packet private_stream_2. Packet private_stream_2 is a packet that stores information that can be used to decode a video stream. Thus, the position of an entry point of a video stream is the position of pack pack() that stores packet private_stream_2.

Block EP_map correlates times of a clip AV stream and positions of a clip AV stream file. Thus, with time information (time stamp) of an access point of a clip AV stream, the clip AV stream file can be easily searched for a data address at which data are read. As a result, the disc can be smoothly randomly accessed.

As described herein, in block EP_map(), sets of time information and position information (sets of field PTS_EP_start and field RPN_EP_start in the second for loop) for each elementary stream are pre-registered in the ascending order (descending order). In other words, time information and position information have been rearranged in a predetermined direction. Thus, a binary search can be performed for the data.

As described above, an elementary stream of a video stream is an elementary stream on the basis of the MPEG2-Video standard. However, the present approach is not limited to this example. For example, an elementary stream of a video stream may be an elementary stream according to the MPEG4-Visual standard or MPEG4-AVC standard. Likewise, as described above, an elementary stream of an audio stream is an elementary stream on the basis of the ATRAC audio system. However, the present approach is not limited to such an example. Instead, an elementary stream of an audio stream may be an elementary stream on the basis of for example MPEG1/2/4 audio system.

### 7. Disc reproducing apparatus

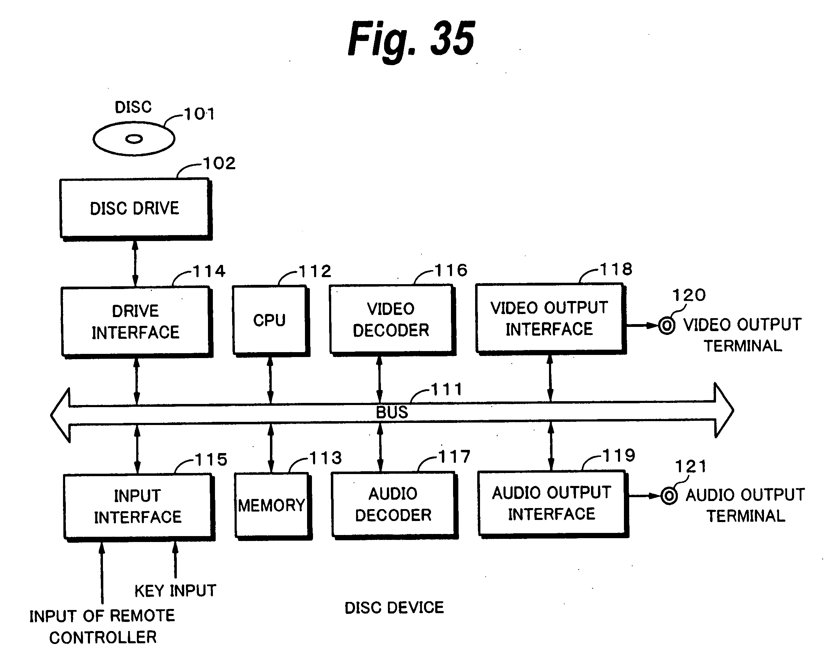

Next, a disc reproducing apparatus according to an embodiment of the present invention will be described. Fig. 35 shows an example of the structure of a disc reproducing apparatus 100 as described herein. Connected to a bus 111 are a central processing unit (CPU) 112, a memory 113, a drive interface 114, an input interface 115, a video decoder 116, an audio decoder 117, a video output interface 118, and an audio output interface 119. Each section of the disc reproducing apparatus 100 can exchange a video stream, an audio stream, various commands, data, and so forth with other sections through the bus 111.

In addition, a disc drive 102 is connected to the drive interface 114. The disc drive 102 exchanges data and commands with the bus 111 through the drive interface 114.

The CPU 112 has a read-only memory (ROM) and a random access memory (RAM) (not shown). The CPU 112 exchanges data and command with each section of the disc reproducing apparatus 100 through the bus 111 according to a program and data pre-stored in the ROM and controls the entire disc reproducing apparatus 100. The RAM is used as a work memory of the CPU 112.

Supplied to the input interface 115 is an input signal that is input from an input device with which the user performs an input operation. The input device is for example a remote control commander with which the user remotely operates the disc reproducing apparatus 100 using for example an infrared signal and keys disposed on the disc reproducing apparatus 100. The input interface 115 converts an input signal supplied from the input device into a control signal for the CPU 112 and outputs the control signal.

Recorded on a disc 101 in the format shown in Fig. 24 to Fig. 34 are a play list, a script program, a clip information file, a clip AV stream file, and so forth. When the disc 101 is loaded into the disc drive 102, it reproduce data from the disc 101 automatically or according to a user's input operation. A script file, a play list file, and a clip information file that are read from the disc 101 are supplied to the CPU 112 and stored in for example a RAM of the CPU 112. The CPU 112 reads a clip AV stream file from the disc 101 according to data and a script program stored in the RAM.

The clip AV stream file that is read from the disc 101 is temporarily stored in the memory 113. The video decoder 116 decodes a video stream and a subtitle stream of the clip AV stream file stored in the memory 113 according to a command received from the CPU 112. The CPU 112 performs an image process such as an enlargement process or a reduction process for the decoded video data and subtitle data, a synthesization process or an addition process for the video stream and subtitle stream, and obtains one stream of video data. The image process may be performed by the video decoder 116 and the video output interface 118. The video data are buffered by the memory 113 and supplied to the video output interface 118. The video output interface 118 converts the supplied video data into an analog video signal and supplies the analog video signal to a video output terminal 120.

Likewise, the audio decoder 117 decodes an audio stream of the clip AV stream file stored in the memory 113 according to a command received from the CPU 112. The decoded audio data are buffered in the memory 113 and supplied to the audio output interface 119. The audio output interface 119 converts the supplied audio data into for example an analog audio signal and supplies the analog audio signal to an audio output terminal 121.

In the example, each section shown in Fig. 35 is composed of independent hardware. However, the present approach is not limited to this example. For example, the video decoder 116 and/or the audio decoder 117 may be composed of software that operates on the CPU 112.

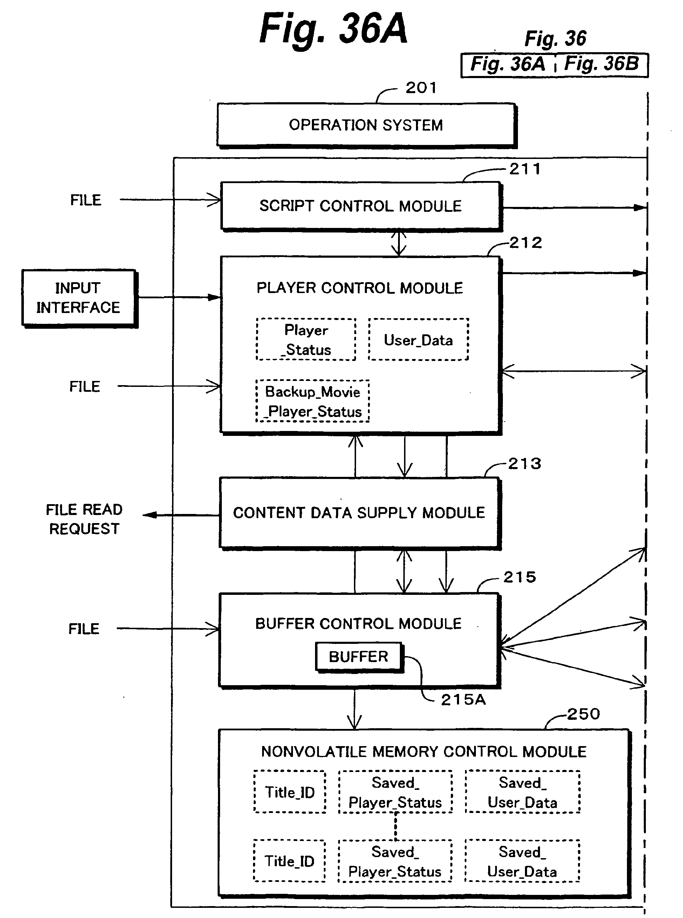

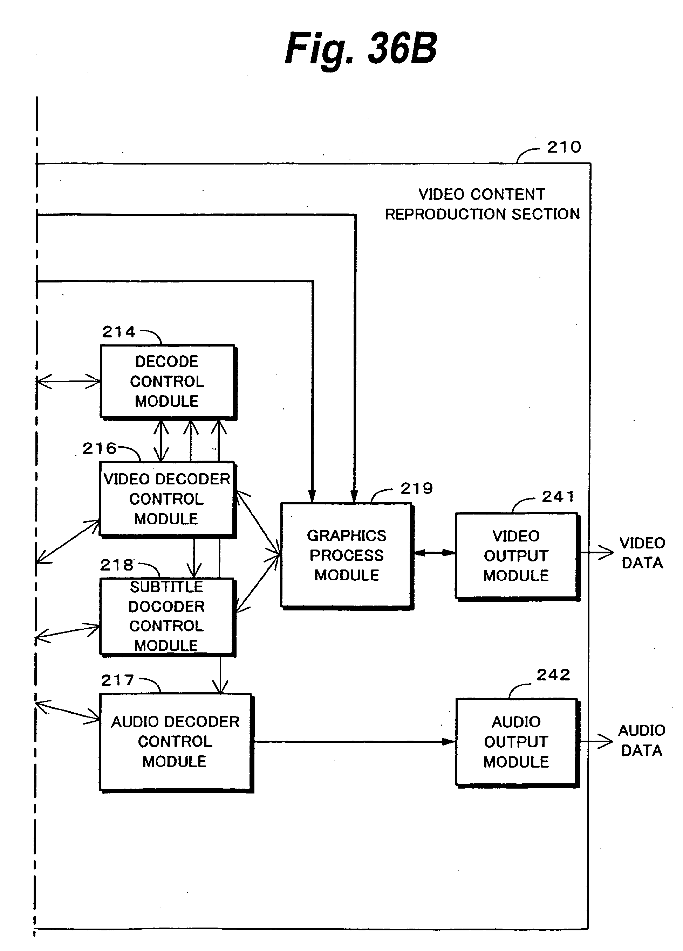

Fig. 36A and Fig. 36 are functional block diagrams describing the operation of the disc reproducing apparatus 100 shown in Fig. 35 in detail. The disc reproducing apparatus 100 is mainly composed of an operation system 201 and a video content reproduction section 210. The video content reproduction section 210 is substantially a software program that operates on the operation system 201. Instead, the video content reproduction section 210 may be composed of software and hardware that integrally operate. In the following description, it is assumed that the video content reproduction section 210 is composed of software. In Fig. 36A and Fig. 36B, the disc drive 102 is omitted.

When the power of the disc reproducing apparatus 100 is turned on, the operation system 201 initially starts up on the CPU 112 and performs necessary processes such as initial settings for each section, and reads an application program (in this example, the video content reproduction section 210) from the ROM. The operation system 201 provides basic services such as reading of a file from the disc 101 and interpreting of a file system for the video content reproduction section 210 while the video content reproduction section 210 is operating. For example, the operation system 201 controls the disc drive 102 through the drive interface 114 corresponding to a file read request supplied from the video content reproduction section 210 and reads data from the disc 101. The data that are read from the disc 101 are supplied to the video content reproduction section 210 under the control of the operation system 201.

The operation system 201 has a multitask process function that controls a plurality of software modules virtually in parallel by for example time-division control. In other words, each module that composes the video content reproduction section 210 shown in Fig. 36A and Fig. 36B can be operated in parallel by the multitask process function of the operation system 201.

Next, the operation of the video content reproduction section 210 will be described more specifically. The video content reproduction section 210 has more internal modules and accomplishes the following functions.
(1) The video content reproduction section 210 determines whether the loaded disc 101 is a disc according to the UMD video standard (hereinafter this disc is referred to as the UMD video disc).
(2) When the determined result represents that the loaded disc 101 is the UMD video disc, the video content reproduction section 210 reads a script file from the disc 101 and supplies the script file to a script control module 211.
(3) When the determined result represents that the loaded disc 101 is the UMD video disc, the video content reproduction section 210 also reads files that composes a database (namely, a play list file, a clip information file, and so forth) and supplies the files to a player control module 212.

Next, the operations of the modules of the video content reproduction section 210 will be described.

The script control module 211 interprets a script program described in script file "SCRIPT.DAT" and executes it. As described in the player model, GUIs that create and output images of the menu screen, move the cursor corresponding to a user's input, and change the menu screen are accomplished by a graphics process module 219 controlled according to the script program. By executing the script program, the script control module 211 can control the player control module 212.

The player control module 212 references database information stored in files such as play list file "PLAYLIST.DAT" and clip information file "XXXXX.CLP" that are read from the disc 101 and performs the following controls to reproduce video contents recorded on the disc 101.
(1) The player control module 212 analyzes database information such as a play list and clip information.
(2) The player control module 212 controls a content data supply module 213, a decode control module 214, and a buffer control module 215.
(3) The player control module 212 performs player state change controls such as reproduction, reproduction stop, and reproduction pause and a reproduction control process such as stream change according to a command received from the script control module 211 or the input interface 115.
(4) The player control module 212 obtains time information of a video stream that is being reproduced from the decode control module 214, displays time, and generates a mark event.

The content data supply module 213 reads content data such as a clip AV stream file from the disc 101 according to a command received from the player control module 212 and supplies the content data to the buffer control module 215. The buffer control module 215 stores the content data in the memory 113 as a substance 215A of the buffer. The content data supply module 213 controls the buffer control module 215 to supply the content data stored in the memory 113 to a video decoder control module 216, an audio decoder control module 217, and a subtitle decoder control module 218 according to requests therefrom. In addition, the content data supply module 213 reads content data from the disc 101 so that the amount of content data stored under the control of the buffer control module 215 becomes a predetermined amount.

The decode control module 214 controls the operations of the video decoder control module 216, the audio decoder control module 217, and the subtitle decoder control module 218 according to a command received from the player control module 212. The decode control module 214 has an internal clock function and controls the operations of the video decoder control module 216, the audio decoder control module 217, and the subtitle decoder control module 218 so that video data and audio data are synchronously output.

The buffer control module 215 exclusively uses a part of the memory 113 as the substance 215A of the buffer. The buffer control module 215 stores a data start pointer and a data write pointer. The buffer control module 215 also has as internal modules a video read function, an audio read function, and a subtitle read function. The video read function has a video read pointer. The video read function has a register that stores information au_information() as access unit information. The audio read function has an audio read pointer. The subtitle read function has a subtitle read pointer and a subtitle read function flag. The subtitle read function flag controls enabling/disabling of the subtitle read function according to a write value. When for example "1" is written to the subtitle read function flag, the subtitle read function becomes enabled. When for example "0" is written to the subtitle read function flag, the subtitle read function becomes disabled.

The video read function, the audio read function, and the subtitle read function, which are internal modules of the buffer control module 215, have demultiplexer functions that demultiplex a multiplexed clip AV stream, of which a video stream, an audio stream, and a subtitle stream have been multiplexed, into these streams. As described herein, a plurality of elementary streams are multiplexed according to time-division multiplying system and MPEG2 system program stream format and thereby a clip AV stream is formed. Thus, the video read function, the audio read function, and the subtitle read function have demultiplexer functions for the MPEG2 system program streams.

Consequently, the video read function reads the value of field stream_id (see Fig. 31) placed at a predetermined position of the video stream and holds the value. Likewise, the audio read function and the subtitle read function read the values of field stream_id and field private_stream_id (see Fig. 31) and hold the values. The values of field stream_id and field private_stream_id are used to analyze the supplied bit stream.

The video decoder control module 216 causes the video read function of the buffer control module 215 to read one video access unit of the video stream from the memory 113 and supply the video access unit to the video decoder 116. The video decoder control module 216 controls the video decoder 116 to decode the video stream supplied to the video decoder 116 in the access unit and generate video data. The video data are supplied to the graphics process module 219.

Likewise, the audio decoder control module 217 causes the audio read function of the buffer control module 215 to read one audio access unit of the audio stream from the memory 113 and supply the audio stream unit to the audio decoder 117. As described herein, the access unit (audio frame) that composes an audio stream has a predetermined fixed length. The audio decoder control module 217 controls the audio decoder 117 to decode the audio stream supplied to the audio decoder 117 in the access unit and generate audio data. The audio data are supplied to an audio output module 242.

The subtitle decoder control module 218 causes the subtitle read function of the buffer control module 215 to read one subtitle access unit of the subtitle stream from the memory 113 and supply the subtitle access unit to the subtitle decoder control module 218. As described herein, the subtitle access unit that composes the subtitle stream contains length information at the beginning. The subtitle decoder control module 218 has a subtitle decode function that can decode the supplied subtitle stream and generate subtitle image data. The subtitle image data are supplied to the graphics process module 219.

As described above, the video data decoded by the video decoder 116 under the control of the video decoder control module 216 and the subtitle image data decoded by the subtitle decoder control module 218 are supplied to the graphics process module 219. The graphics process module 219 adds the subtitle image data to the supplied video data and generates a video signal that is output. The graphics process module 219 generates the menu image and the message image corresponding to a command received from the script control module 211 and the player control module 212 and overlays them with the output video signal.

For example, the graphics process module 219 performs an enlargement process and a reduction process for the supplied subtitle image data and adds the processed image data to the video data according to a command received from the script control module 211.

In addition, the graphics process module 219 converts the aspect ratio of the output signal according to the aspect ratio of the predetermined output video device and the output aspect ratio designated in the content reproduced from the disc 101. When the aspect ratio of the output video device is 16 : 9 and the output aspect ratio is 16 : 9, the graphics process module 219 directly outputs the video data. When the output aspect ratio is 4 : 3, the graphics process module 219 performs a squeezing process that matches the height of the image with the height of the screen of the output video device, inserts black portions into left and right sides of the image, and outputs the resultant image. When the aspect ratio of the output video device is 4 : 3 and the output aspect ratio is 4 : 3, the graphics process module 219 directly outputs the video data. When the output aspect ratio is 16 : 9, the graphics process module 219 performs a squeezing process that matches the width of the image with the width of the screen of the output video device, inserts black portions into the upper and lower portions of the image, and outputs the resultant image.

The graphics process module 219 also performs a process that captures the video signal that is being processed according to a request from the player control module 212 and supplies the requested video signal thereto.

A video output module 241 exclusively uses a part of the memory 113 as a first-in first-out (FIFO) buffer. The video output module 241 temporarily stores video data processed by the graphics process module 219 in the buffer and reads the video data therefrom at predetermined timing. The video data that are read from the buffer are output from the video output interface 118.

The audio output module 242 exclusively uses a part of the memory 113 as a FIFO buffer. The audio output module 242 stores audio data that are output from the audio output interface 119 to the buffer and reads the audio data therefrom at predetermined timing. The audio data that are read from the buffer are output from the audio output interface 119.

When the audio mode of the content is dual monaural (for example, bilingual), the audio output module 242 outputs the audio data according to a predetermined audio output mode. When the audio output mode is "main audio," the audio output module 242 copies audio data of the left channel in for example the memory 113 and outputs audio data of the left channel and audio data from the memory 113. Thus, the audio output module 242 outputs audio data of only the left channel. When the audio output mode is "sub audio," the audio output module 242 copies audio data of the right channel in for example the memory 113 and outputs audio data of the right channel and audio data from the memory 113. Thus, the audio output module 242 outputs audio data of only the right channel. When the audio output mode is "main and sub audio" or the content is stereo, the audio output module 242 directly outputs the audio data.

The user can interactively sets the audio output mode on for example the menu screen that the video content reproduction section 210 generates.

A nonvolatile memory control module 250 writes data to an area whose data are not erased after the operation of the video content reproduction section 210 is completed (this area is referred to as a nonvolatile area) and reads data therefrom according to a command received from the player control module 212. The nonvolatile memory control module 250 has a function that stores a plurality of sets of data Saved_Player_Status and data Saved_Player_Data with a key of a title ID (Title_ID). The nonvolatile memory control module 250 stores as data Saved_Player_Status data Backup_Player_Status that the player control module 212 has. Data Backup_Player_Status corresponds to data of for example the player status 323B that exist immediately before the operation of the player control module 212 is completed. Data Saved_Player_Status corresponds to the resume information 324. In addition, the nonvolatile memory control module 250 stores as data Saved_User_Data data User_Data that the player control module 212 has. Data User_Data are predetermined data that the user sets to the player control module 212.

When the disc reproducing apparatus 100 has a flash memory or the like, which is a nonvolatile memory, the nonvolatile memory control module 250 correlatively stores a set of data Saved_Player_Status and data Saved_User_Data with the title ID of the disc 101 in a predetermined region of the flash memory. The storage medium that the nonvolatile memory control module 250 stores data is not limited to a flash memory, but a hard disk or the like.

### 8. Control of user's operations

Next, the restriction of user's operations according to an embodiment of the present invention will be described. According to the embodiment of the present invention, combinations of restrictions of user's operations are defined as modes (referred to as user's operation mask modes, UOP mask modes). In other words, flags that represent whether user's operations are permitted are not provided. Instead, a set of user's operations expected to be frequently used are provided on the player side. The content creator side selects a provided mode to restrict user's operations.

Information of a user's operation mask mode is defined as field UOP_mask_mode in syntax of a play list. The information of the user's operation mask mode is placed in only the play list layer, not in a plurality of layers.

Thus, combinations of restrictions of user's operations are implemented as user's operation mask mode on the player side and provided to the content creator side. As a result, the load of the content creator side that verifies the operations decrease.

When the content creator needs to restrict user's operations, he or she needs to only select a prepared user's operation mask mode. Thus, user's operations can be more easily controlled. As a result, the load of the content creator side that creates contents and verifies their operations decreases. In addition, the load of the player side that verifies implemented operations decreases.

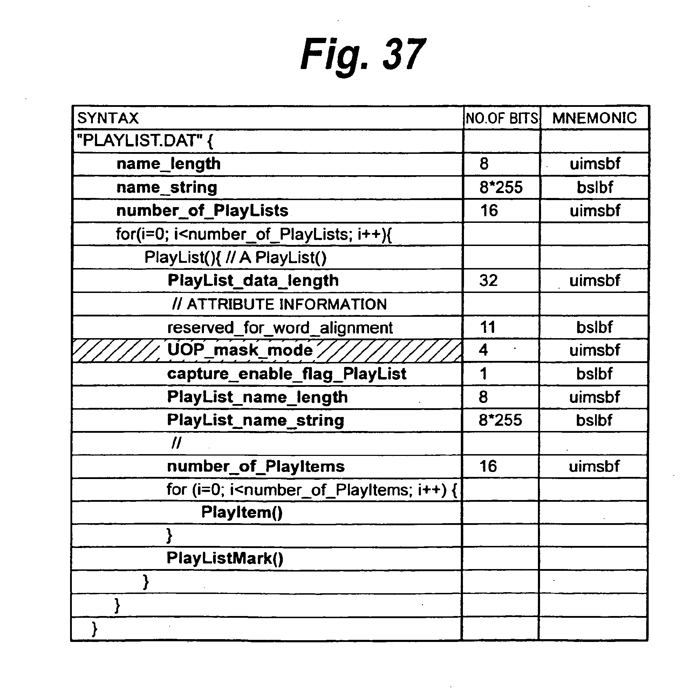

Next, the restrictions of user's operations according to the embodiment of the present invention will be described. Fig. 37 shows an example of syntax of file "PLAYLIST.DAT" according to the embodiment of the present invention. As shown in Fig. 37, field UOP_mask_mode is added to file "PLAYLIST.DAT" according to the UMD video standard shown in Fig. 25. In the example shown in Fig. 37, field UOP_mask_mode is inserted between field reserved_for_word_alignment preceded by field PlayList_data_length and field capture_enable_flag_PlayList of file "PLAYLIST.DAT" shown in Fig. 25. Thus, field UOP_mask_mode is described for each play list stored in file "PLAYLIST.DAT."

The position of field UOP_mask_mode is an example, not limited thereto.

As shown in Fig. 4, when the movie player 300 starts reproducing data from the disc 101, the movie player 300 reads file "PLAYLIST.DAT." While the movie player 300 is reproducing data from the disc 101, the movie player 300 stores information of a play list that is read from the disc 101 in an internal memory. Thus, while the movie player 300 is reproducing data from the disc 101, the movie player 300 also stores information of field UOP_mask_mode in the memory.

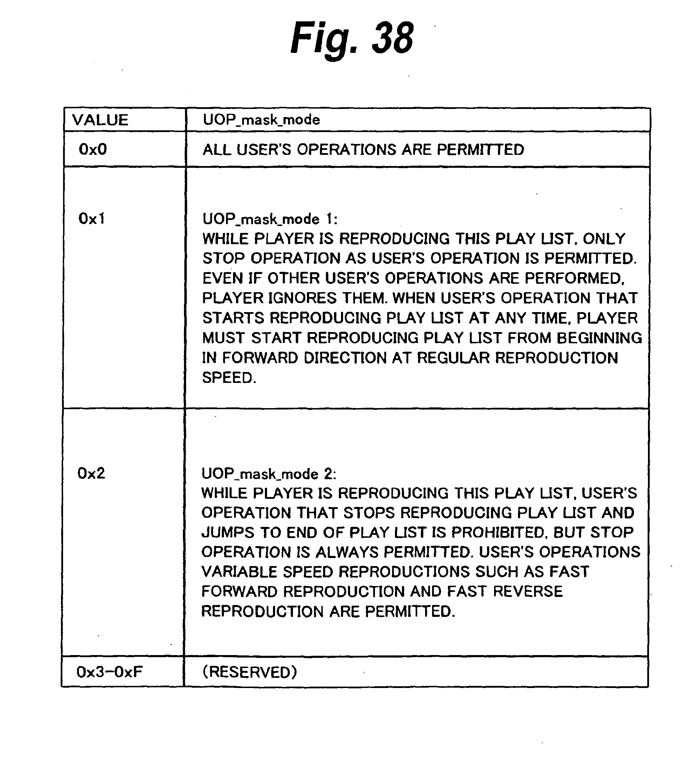

Field UOP_mask_mode has a data length of 4 bits and represents a user's operation mask mode defined for each play list stored in file "PLAYLIST.DAT." Fig. 38 shows an example of the meaning of the value of field UOP_mask_mode. When the value of field UOP_mask_mode is "0x0," all user's operations are permitted for the play list.

When the value of field UOP_mask_mode is "0x1," the user's operation mask mode for the play list is "1." When the user's operation mask mode for the play list is "1," only the reproduction stop as a user's operation is permitted. Even if other user's operations are performed while the play list being reproduced, the player side ignores these user's operations.

When the user's operation mask mode for the play list is "1" and a user's operation so-called "jump reproduction" that starts reproducing the play list at any time is performed, the jump reproduction is not permitted. Instead, the play list is reproduced from the beginning in the forward direction at a predetermined speed (for example, regular reproduction speed). In other words, while another play list is being reproduced, when a jump reproduction is performed for a play list whose user's operation mask mode is "1," the play list is reproduced in the forward direction at a predetermined speed, for example regular reproduction speed.

It is expected that the user's operation mask mode "1" is used for a play list that is reproduced before a movie content is reproduced from the disc 101 when the play list is used for a warning message (FBI warning) that represents that contents are prohibited from being copied and broadcast without permission.

When the value of field UOP_mask_mode is "0x2," the user's operation mask mode for the play list is "2." When the user's operation mask mode for the play list is "2," a user's operation that jumps to the end of the play list is prohibited while the play list is being reproduced, but a stop operation is always permitted. In addition, user's operations fast forward reproduction and fact reverse reproduction are permitted.

The restrictions of the user's operation mask mode "2" are weaker than those of the user's operation mask mode "1." It is expected that the user's operation mask mode "2" is used for a play list that is reproduced before or after a rental content is reproduced from the disc 101 when the play list is used for an advertisement picture (trailer).

The values "0x3" to "0xF" of field UOP_mask_mode are future reserved.

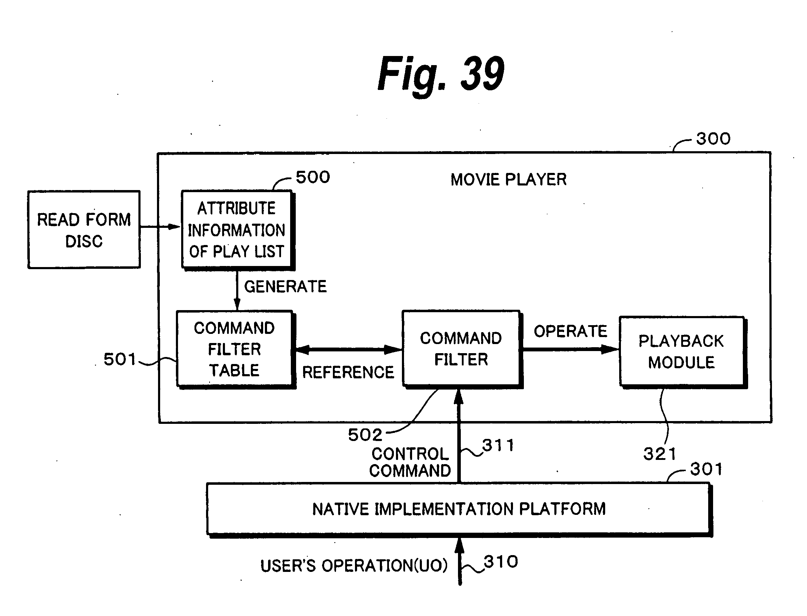

Next, the control of user's operations according to field UOP_mask_mode will be described. Fig. 39 is a functional block diagram showing an example of a user's operation restriction function of the movie player 300. The movie player 300 generates attribute information 500 of a play list read from the disc 101, namely according to the value of field UOP_mask_mode.

On the other hand, a user's operation is input as the user's input 310 to the native implementation platform 301. The native implementation platform 301 converts the user's input 310 into a control command 311 and supplies the control command 311 to the movie player 300. The control command 311 is supplied to the command filter 502 of the movie player 300. The command filter 502 references a command filter table 501 and determines whether to supply the control command 311 to the playback module 321. The user's operation restricted according to field UOP_mask_mode is a user's operation corresponding to the control command 311 that is filtered by the command filter table 501 and is not supplied to the playback module 321.

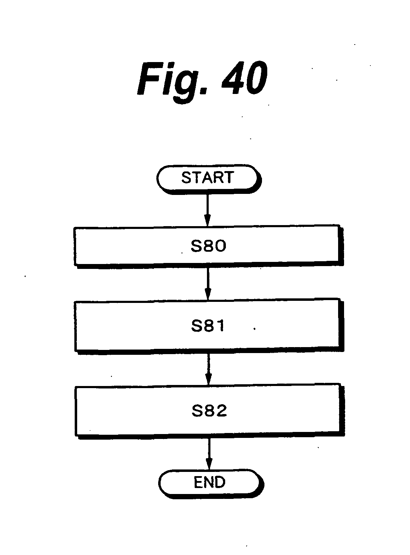

Fig. 40 is a flow chart showing an example of a procedure that creates the command filter table 501. When the disc 101 is loaded into the disc reproducing apparatus 100 (at step S80), the movie player 300 reads a play list and a clip information file from the disc 101. The movie player 300 reads field UOP_mask_mode from attribute information of the play list (at step S81). Thereafter, the movie player 300 creates the command filter table 501 according to a user's operation mask mode represented in field UOP_mask_mode (at step S82). The movie player 300 creates the command filter table 501 for each play list.

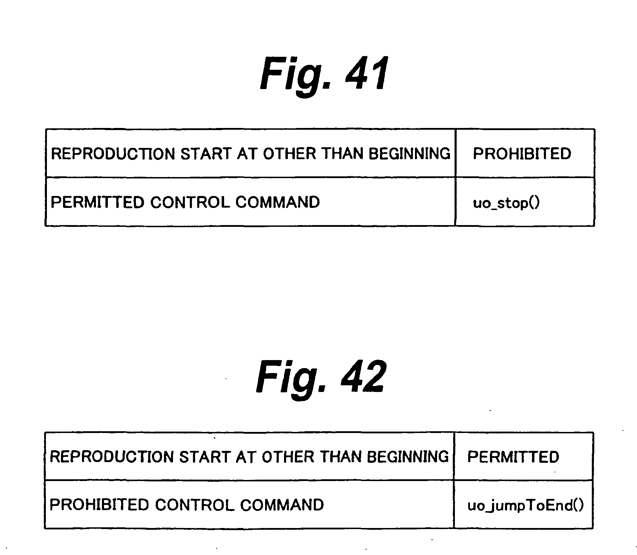

Fig. 41 shows an example of the command filter table 501 according to the user's operation mask mode "1." The command filter table 501 represents that the reproduction start at other than the beginning of the play list is "prohibited" and the control command 311 that is permitted is only command uo_stop() (see Fig. 12A, Fig. 12B and Fig. 12C).

Fig. 42 shows an example of the command filter table 501 according to the user's operation mask mode "2." The command filter table 501 represents that reproduction start at other than the beginning of the play list is "permitted" and only command uo_jumpToEnd() is prohibited in the control commands 311 described in Fig. 12A, Fig. 12B and Fig. 12C. In other words, when the user's operation mask mode is "2," all the control commands 311 other than command uo_jumpToEnd() are permitted.

The command filter table 501 described in Fig. 41 and Fig. 42 is not provided on the content creator side, but generated in the movie player 300. The command filter table 501 implemented to the player is not restricted.

Fig. 41 and Fig. 42 show the command filter table 501 according to the user's operation mask modes "1" and "2." However, the present invention is not limited to these examples. In other words, the command filter table 501 may have a list of user's operation mask modes or describe them with an if statement. When an if statement is used, the function of the command filter table 501 can be accomplished by a script.

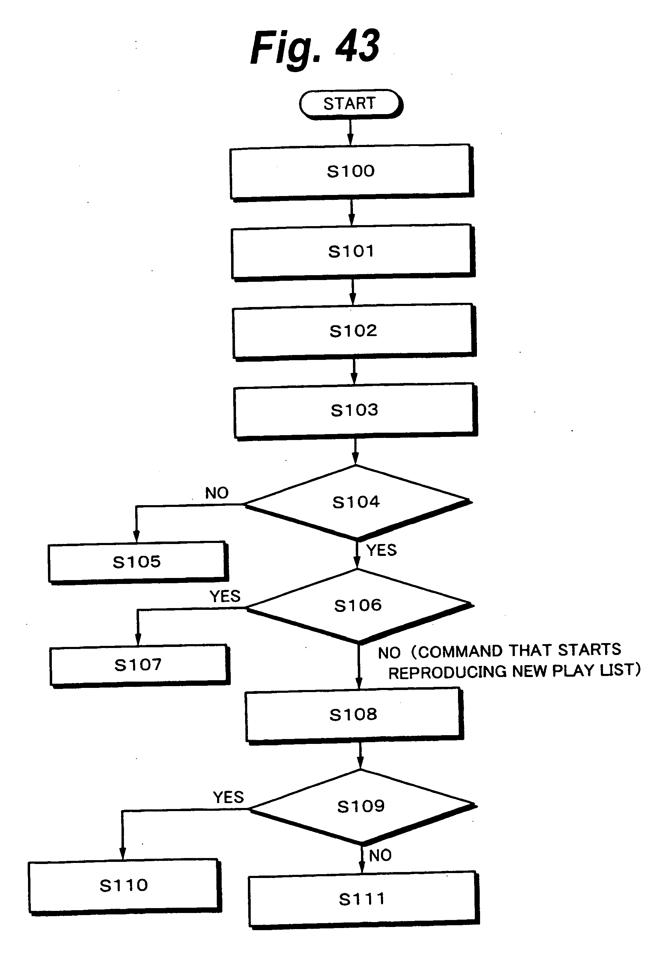

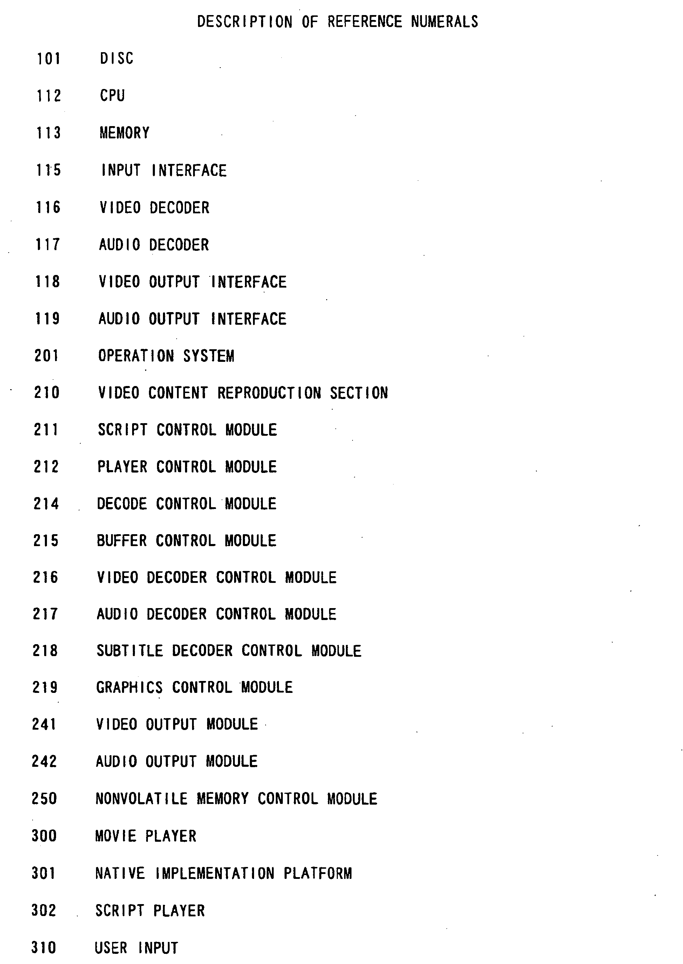

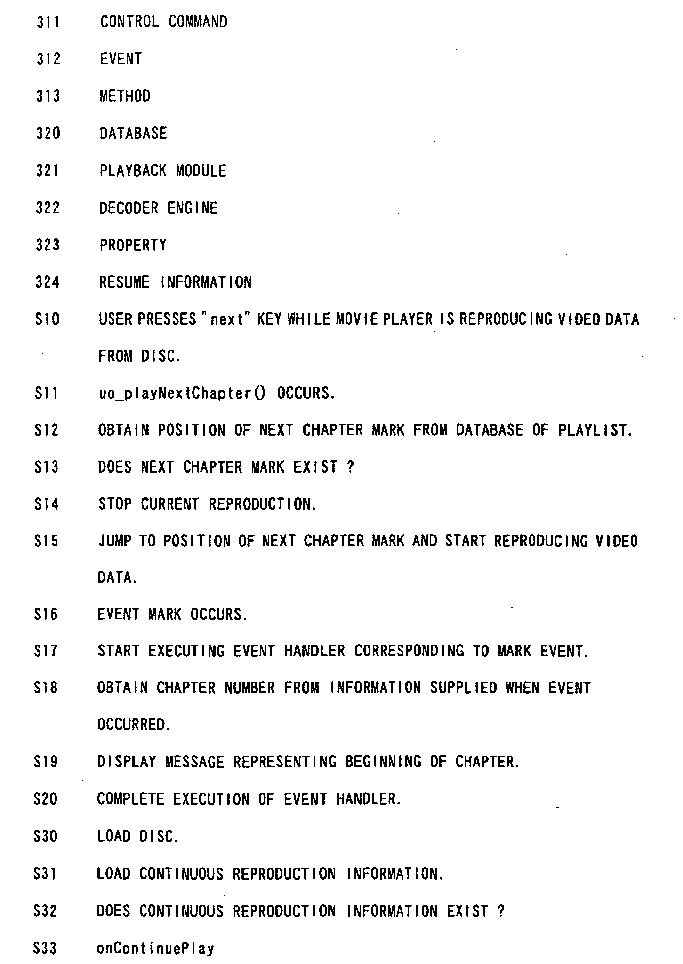

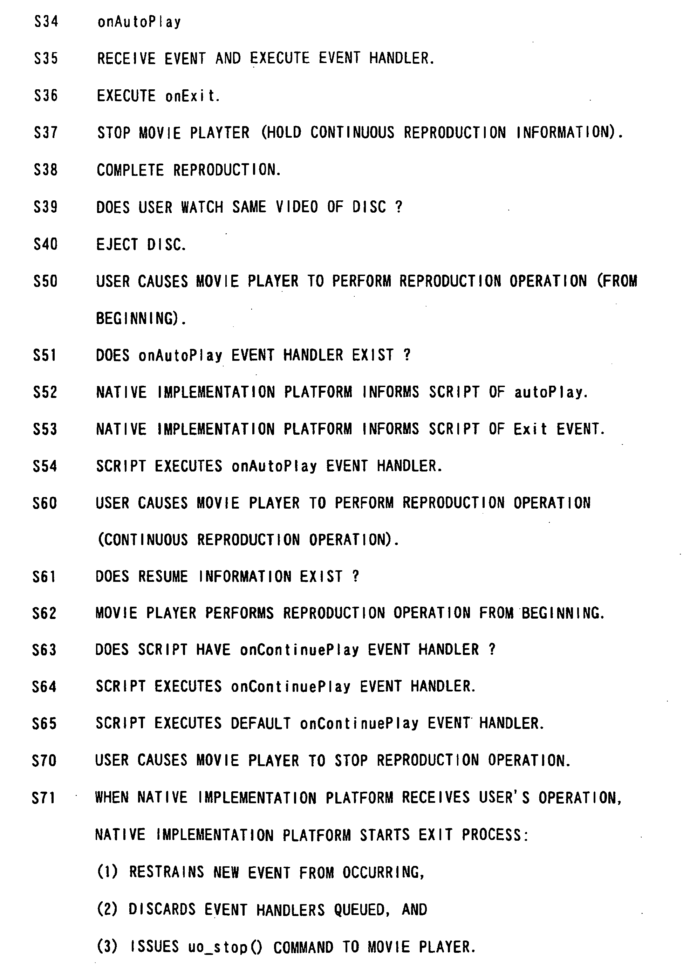

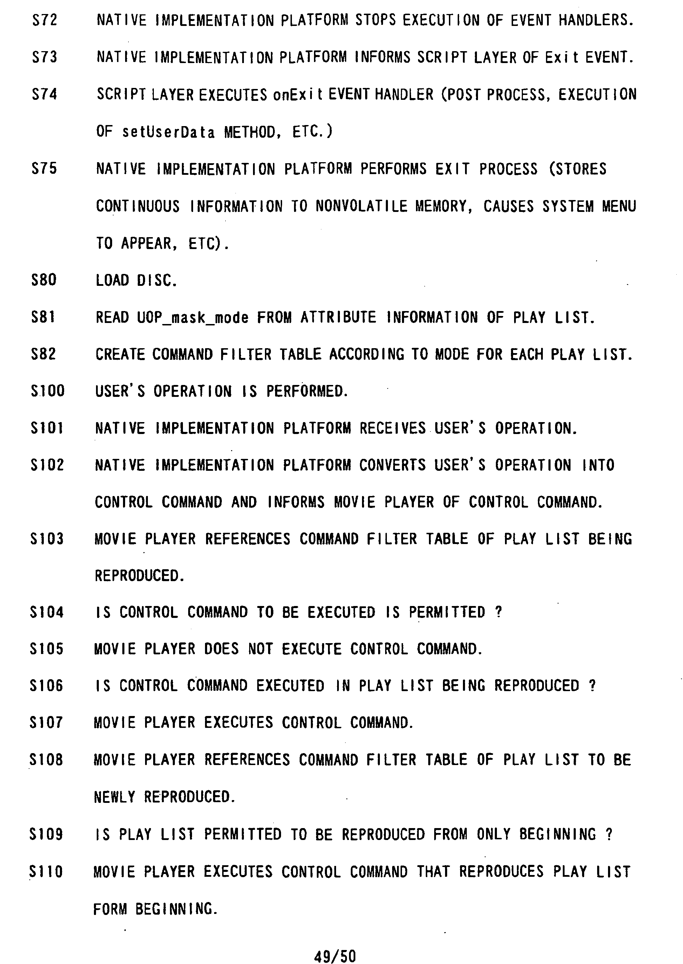

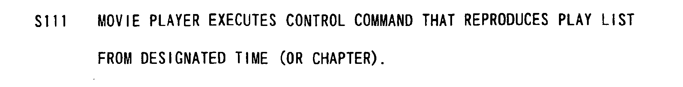

Fig. 43 is a flow chart showing an example of a process that restrict user's operations with the command filter table 501. Before the process is started according to the flow chart, the disc 101 is loaded into the player. When the disc 101 is loaded into the player, file "PLAYLIST.DAT" is read. According to file "PLAYLIST.DAT," the command filter table 501 is created.

When a user's operation is performed for the player at step S100, the user's input 310 according to the user's operation is input to the native implementation platform 301. When the native implementation platform 301 receives the user's input 310 at step S101, the flow advances to step S102. At step S102, the native implementation platform 301 converts the received user's input 310 into a control command 311 for the movie player 300 and informs the movie player 300 of the control command 311.

When the movie player 300 receives the control command 311, the movie player 300 references the command filter table 501 of the play list that is being reproduced (at step S103). At step S104, the movie player 300 determines whether the informed control command 311 is permitted to be executed in accordance with the command filter table 501. When the determined result represents that the control command 311 is not permitted to be executed, the flow advances to step S105. At step S105, the movie player 300 does not execute the control command 311.

In contrast, when the determined result at step S104 represents that the control command 311 is permitted to be executed, the flow advances to step S106. At step S106, the movie player 300 determines whether the control command 311 is a command that is executed in the play list that is being reproduced. Namely, at step S106, the movie player 300 determines whether the control command 311 is a command that is executed in the play list that is being reproduced for example a chapter jump command or a stream change command that jumps to another chapter of the play list or that changes the stream or a command that stops the reproduction of the current play list and starts the reproduction of a predetermined chapter of another play list.

When the determined result at step S106 represents that the control command 311 is a command that is executed in the play list that is being reproduced, the flow advances to step S107. At step S107, the movie player 300 executes the control command 311. When the movie player 300 executes the control command 311, the movie player 300 can restrict the control command 311 with an event handler. In other words, after a user's operation is filtered by a user's operation mask, the user's operation may be filtered by an event handler.

When the determined result at step S106 represents that the control command 311 is a command that is not executed in the play list that is being reproduced, the flow advances to step S108. At step S108, the movie player 300 references the command filter table 501 of another play list to be newly reproduced. When the control command 311 of which the movie player 300 is informed at step S102 is a command that jumps from the play list that is being reproduced to another play list, the movie player 300 references the command filter table 501 of the play list to be jumped.

Thereafter, the flow advances to step S109. At step S109, the movie player 300 determines whether the other play list to be newly reproduced is permitted to be reproduced from the beginning according to the command filter table 501 of the other play list. When the determined result represents that the play list is permitted to be reproduced from only the beginning, the flow advances to step S110. Even if the control command 311 reproduces the other play list from other than the beginning, the movie player 300 causes the playback module 321 to start reproducing the other play list from the beginning.

When the determined result represents that the other play list is permitted to be reproduced from other than the beginning, the flow advances to step S111. At step S111, the movie player 300 causes the playback module 321 to reproduce the other play list at the time and chapter according to the control command 311.

As described above, user's operations are controlled according to the embodiment of the present invention.

## Claims

1. A reproducing apparatus (100) that reproduces content data from a disc-shaped recording medium (101), comprising:
read means (102) for reading data from a recording medium on which at least content data, reproduction designation information that designates a reproduction path of the content data and contains a field storing a value representing a restriction mode as attribute information (500) against a reproduction control designation for the content data, and a reproduction control program that controls the reproduction of the content data are recorded;
player means (210) for reproducing the content data according to the reproduction control program; and
control command generation means (112) for generating a control command for the player means corresponding to a user's operation that performs the reproduction control designation for the content data,
wherein the reproducing apparatus stores multiple combinations at restrictions of user operations, each corresponding to a predefined restriction mode ;
wherein the player means reads the value that represents the restriction mode of the reproduction designation information from the recording medium, creates a table (501) for the value that represents the restriction mode of the reproduction designation information, wherein said table contains the combination of restrictions of user operations corresponding to said restriction mode, and the player means controls the permission or non-permission for the execution of the control command generated by the control command generation means according to the table;
and wherein a first value for said restriction mode indicates that all user operations are permitted, and second and third values for said restriction mode represent different combinations of restrictions of user operations.

2. The reproducing apparatus as set forth in claim 1,
wherein the restriction mode is a mode that permits only the control command to cause the player means to stop reproducing the content data.

3. The reproducing apparatus as set forth in claim 1,
wherein when the control command causes the player means to start reproducing the content data from any time in a reproduction region corresponding to the reproduction designation information having the attribute information that contains the value that represents the restriction mode, the restriction mode controls the player means so that it reproduces the content data from the beginning of the reproduction region at a predetermined reproduction speed.

4. The reproducing apparatus as set forth in claim 1,
wherein when the control command occurs while the player means is reproducing the content data corresponding to the reproduction designation information having the attribute information that contains the value that represents the restriction mode, the restriction mode permits only the control command to cause the player means to stop reproducing the content data, and
wherein when the control command that causes the player means to reproduce the content data from any time in a reproduction region corresponding to the reproduction designation information having the attribute information that contains the value that represents the restriction mode occurs, the restriction mode controls the player means so that it reproduces the content data from the beginning of the reproduction region at a predetermined reproduction speed.

5. The reproducing apparatus as set forth in claim 1,
wherein while the player means is reproducing the content data corresponding to the reproduction designation information having the attribute information that contains the value that represents the restriction mode, when the control command causes the player means to stop reproducing the content data corresponding to the reproduction designation information and jump to the end of the reproduction region corresponding to the reproduction designation information, the restriction mode prohibits the control command from being executed.

6. The reproducing apparatus as set forth in claim 1,
wherein when the control command occurs, the player means determines whether the control command is permitted to be executed according to the table for the value that represents the restriction mode contained in the attribute information of the reproduction designation information corresponding to the content data that the player means is reproducing,
wherein when the determined result represents that the control command is permitted to be executed, the player means determines whether the control command is executed in a first reproduction region corresponding to the reproduction designation information, and
wherein when the determined result represents that the control command is not executed in the first reproduction region, the player means determines whether the control command permits only the player means to reproduce the content data from the beginning of a second reproduction region according to the table for the value that represents the restriction mode contained in the attribute information of the reproduction designation information corresponding to the second reproduction region from which the control command causes the player means to newly start control reproducing the content data.

7. A reproducing method of reproducing content data from a disc-shaped recording medium using a reproducting apparatus comprising the steps of:
reading data from a recording medium on which at least content data, reproduction designation information that designates a reproduction path of the content data and contains field storing a value representing a restriction mode as attribute information against a reproduction control designation for the content data, and a reproduction control program that controls the reproduction of the content data are recorded;
reproducing the content data according to the reproduction control program; and
generating a control command for the player step corresponding to a user's operation that performs the reproduction control designation for the content data,
wherein the reproducing apparatus stores multiple combinations at restrictions of user operations, each corresponding to a predefined restriction mode ;
wherein the player step is performed by reading the value that represents the restriction mode of the reproduction designation information from the recording medium, creating a table for the value that represents the restriction mode of the reproduction designation information, wherein said table contains the combination of restrictions of user operations corresponding to said restriction mode, and controlling the permission or non-permission for the execution of the control command generated at the control command generation step according to the table;
and wherein a first value for said restriction mode indicates that all user operations are permitted, and second and third values for said restriction mode represent different combinations of restrictions of user operations.

8. A reproducing program that causes a computer device to execute the reproducing method of claim 7.

## Patentansprüche

1. Wiedergabevorrichtung (100), die Inhaltsdaten von einem scheibenförmigen Aufzeichnungsmedium (101) wiedergibt, aufweisend:
Lesemittel (102) zum Lesen von Daten von einem Aufzeichnungsmedium, auf dem wenigstens Inhaltsdaten, Wiedergabebenennungsinformation, die einem Wiedergabepfad der Inhaltsdaten benennt und einen Wert beinhaltet, der eine Beschränkungsbetriebsart als Attributinformation gegen eine
Wiedergabesteuerungsbenennung für Inhaltsdaten beinhaltet, und ein Wiedergabesteuerungsprogramm, das die Wiedergabe der Inhaltsdaten steuert, aufgezeichnet sind;
Abspielmittel (210) zum Wiedergeben der Wiedergabedaten gemäß dem Wiedergabesteuerungsprogramm; und
Steuerbefehlerzeugungsmittel (112) zum Erzeugen eines Steuerbefehls für die Abspielmittel entsprechend einer Bedienhandlung eines Nutzers, die die Wiedergabesteuerungsbenennung für die Inhaltsdaten durchführt,
wobei die Wiedergabevorrichtung mehrere Kombinationen von Beschränkungen von Nutzerbedienhandlungen speichert, die jede einer vordefinierten Beschränkungsbetriebsart entsprechen;
wobei die Abspielmittel den Wert, der die Beschränkungsbetriebsart der Wiedergabebenennungsinformation von dem Aufzeichnungsmedium angibt, liest, eine Tabelle (501) für den Wert, der die Beschränkungsbetriebsart der Wiedergabebenennungsinformation angibt, erzeugt, wobei die Tabelle die Kombination von Beschränkungen von Bedienerbedienungen, die der Beschränkungsbetriebsart entsprechen, enthält und die Abspielmittel die Erlaubnis oder das Verbot für die Ausführung von dem Steuerbefehl, der durch die Steuerbefehlerzeugungsmittel gemäß der Tabelle erzeugt wurden, steuert;
und wobei ein erster Wert für die Beschränkungsbetriebsart angibt, dass alle Nutzerbedienhandlungen erlaubt sind, und ein zweiter und dritter Wert für die Beschränkungsbetriebsart unterschiedliche Kombinationen von Beschränkungen von Nutzerbedienhandlungen angeben.

2. Wiedergabevorrichtung wie in Anspruch 1 ausgeführt,
wobei die Beschränkungsbetriebsart eine Betriebsart ist, die nur den Steuerbefehl erlaubt, die Abspielmittel zu Veranlassen, die Wiedergabe der Inhaltsdaten zu beenden.

3. Wiedergabevorrichtung wie in Anspruch 1 ausgeführt,
wobei, wenn der Steuerbefehl die Abspielmittel veranlasst, die Wiedergabe von Inhaltsdaten ab irgendeinem bestimmten Zeitpunkt in einem Wiedergabebereich, der der Wiedergabebenennungsinformation entspricht, die Attributinformation hat, die einen Wert der die Beschränkungsbetriebsart angibt, zu starten, die Beschränkungsbetriebsart die Abspielmittel so steuert, dass sie die Inhaltsdaten vom Beginn des Wiedergabebereichs mit einer vorgegebenen Wiedergabegeschwindigkeit wiedergibt.

4. Wiedergabevorrichtung wie in Anspruch 1 ausgeführt,
wobei, wenn der Steuerbefehl auftritt, während die Abspielmittel Inhaltsdaten, die der Wiedergabebenennungsinformation entsprechen, die die Attributinformation hat, die den Wert enthält, der die Beschränkungsbetriebsart angibt, wiedergibt, die Beschränkungsbetriebsart nur dem Steuerbefehl erlaubt, zu veranlassen, dass die Abspielmittel die Wiedergabe der Inhaltsdaten beenden, und
wobei, wenn der Steuerbefehl, der die Abspielmittel veranlasst, Inhaltsdaten ab irgendeiner Zeit in einem Wiedergabebereich wiederzugeben, der der Wiedergabebenennungsinformation entspricht, die die Attributinformation hat, die den Wert aufweist, der die Beschränkungsbetriebsart angibt, die Beschränkungsbetriebsart die Abspielmittel so steuert, dass sie die Inhaltsdaten vom Anfang des Wiedergabebereichs mit einer vorgegebenen Wiedergabegeschwindigkeit wiedergeben.

5. Wiedergabevorrichtung, wie in Anspruch 1 ausgeführt, wobei, während die Abspielmittel die Inhaltsdaten wiedergeben, die der Wiedergabebenennungsinformation entsprechen, die Attributinformation hat, die den Wert aufweist, der die Beschränkungsbetriebsart angibt, während der Steuerbefehl die Abspielmittel veranlasst, Wiedergabe der Inhaltsdaten zu beenden, die der Wiedergabebenennungsinformation entsprechen und an das Ende des Wiedergabebereichs zu springen, der der Wiedergabebenennungsinformation entspricht, die Beschränkungsbetriebsart die Ausführung des Steuerungsbefehl verhindert.

6. Wiedergabevorrichtung, wie in Anspruch 1 ausgeführt,
wobei, wenn der Steuerbefehl auftritt, die Abspielmittel gemäß der Tabelle für den Wert, der die Beschränkungsbetriebsart angibt und der in der Attributinformation der Wiedergabebenennungsinformation gespeichert ist, die den Inhaltsdaten entspricht, die die Abspielmittel reproduzieren ermitteln, ob den Steuerbefehl auszuführen erlaubt ist, wobei wenn das ermittelte Ergebnis angibt, dass den Steuerbefehl auszuführen erlaubt ist, die Abspielmittel ermitteln, ob der Steuerbefehl in einem ersten Wiedergabebereich, der der Wiedergabebenennungsinformation entspricht, ausgeführt wird, und,
wobei, wenn das ermittelte Ergebnis angibt, dass der Steuerbefehl nicht in den ersten Wiedergabebereich ausgeführt wird, die Abspielmittel ermitteln, ob der Steuerbefehl nur den Abspielmitteln erlaubt, die Inhaltsdaten von Beginn eines zweiten Wiedergabebereichs gemäß der Tabelle für den Wert, der die Beschränkungsbetriebsart angibt, die in der Attributinformation der Wiedergabebenennungsinformation enthalten ist, die dem zweiten Wiedergabebereich entspricht, aus dem der Steuerbefehl die Abspielmittel veranlasst, die Wiedergabe der Inhaltsdaten neu zu starten.

7. Wiedergabeverfahren zum Wiedergeben von Inhaltsdaten von einem scheibenförmigen Aufzeichnungsmedium unter Verwendung einer Wiedergabevorrichtung, aufweisend die Schritte:
Lesen von Daten von einem Aufzeichnungsmedium, auf dem wenigstens Inhaltsdaten, Wiedergabebenennungsinformation, die einen Wiedergabepfad der Inhaltsdaten angibt, und die ein Feld aufweist, das einen Wert speichert, der eine Beschränkungsbetriebsart als Attributinformation gegen eine
Wiedergabesteuerungsbenennung für die Inhaltsdaten angibt, und ein Wiedergabesteuerungsprogramm, das die Wiedergabe der Inhaltsdaten, steuert, gespeichert sind;
Wiedergeben der Inhaltsdaten gemäß dem Wiedergabesteuerungsprogramm; und Erzeugen eines Steuerbefehls für den Abspielschritt, entsprechend einer Nutzerbedienhandlung, die die Wiedergabesteuerbenennung für die Inhaltsdaten durchführt,
wobei die Wiedergabevorrichtung mehrere Kombinationen von Beschränkungen von Nutzerbedienhandlungen speichert, jede einer vorgegebenen Beschränkungsbetriebsart entsprechend;
wobei der Abspielschritt durch Lesen des Werts, der die Beschränkungsbetriebsart der Beschränkungsbenennungsinformation von dem Aufzeichnungsmedium angibt, durch Erzeugen einer Tabelle für den Wert die Beschränkungsbetriebsart der Wiedergabebenennungsinformation angibt, wobei die Tabelle die Kombination von Beschränkungen von Nutzerbedienhandlungen enthält, die der Beschränkungsbetriebsart entsprechen, und Steuern der Erlaubnis oder des Verbots zur Ausführung des Steuerbefehls, der in dem Steuerbefehlerzeugungsschritt gemäß der Tabelle erzeugt wird, durchgeführt wird;
und wobei ein erster Wert für die Beschränkungsbetriebsart angibt, dass alle Nutzerbedienhandlungen erlaubt sind, und ein zweiter und dritter Wert für die Beschränkungsbetriebsart unterschiedliche Kombinationen von Beschränkungen von Nutzerbedienhandlungen angeben.

8. Wiedergabeprogramm, das eine Computervorrichtung veranlasst, das Wiedergabeverfahren von Anspruch 7 auszuführen.

## Revendications

1. Appareil de reproduction (100) reproduisant des données de contenu d'un support d'enregistrement en forme de disque (101), comprenant :
un moyen de lecture (102) pour lire des données sur un support d'enregistrement sur lequel sont enregistrés au moins des données de contenu, des informations de désignation de reproduction désignant un chemin de reproduction des données de contenu et contenant un champ mémorisant une valeur représentant un mode de restriction comme informations d'attribut (500) par rapport à une désignation de contrôle de reproduction pour les données de contenu, et un programme de contrôle de reproduction contrôlant la reproduction des données de contenu ;
un moyen de lecture (210) pour reproduire les données de contenu conformément au programme de contrôle de reproduction ; et
un moyen de génération de commande de contrôle (112) pour générer une commande de contrôle pour le moyen de lecture correspondant à une opération d'un utilisateur effectuant la désignation de contrôle de reproduction pour les données de contenu,
dans lequel l'appareil de reproduction mémorise plusieurs combinaisons de restrictions d'opération d'utilisateur, correspondant chacune à un mode de restriction prédéfini ;
dans lequel le moyen de lecture lit sur le support d'enregistrement la valeur représentant le mode de restriction des informations de désignation de reproduction, crée une table (501) pour la valeur représentant le mode de restriction des informations de désignation de reproduction, dans lequel ladite table contient la combinaison des restrictions des opérations d'utilisateur correspondant audit mode de restriction, et le moyen de lecture contrôle la permission ou l'absence de permission d'exécution de la commande de contrôle générée par le moyen de génération de commande de contrôle conformément à la table ;
et dans lequel une première valeur dudit mode de restriction indique que toutes les opérations d'utilisateur sont autorisées et des deuxième et troisième valeurs pour ledit mode de restriction représentent différentes combinaisons de restrictions d'opération d'utilisateur.

2. Appareil de reproduction selon la revendication 1,
dans lequel le mode de restriction est un mode autorisant uniquement à la commande de contrôle de faire arrêter par le moyen de lecture la reproduction des données de contenu.

3. Appareil de reproduction selon la revendication 1,
dans lequel, lorsque la commande de contrôle fait démarrer par le moyen de lecture la reproduction des données de contenu à partir d'un instant quelconque dans une région de reproduction correspondant aux informations de désignation de reproduction ayant les informations d'attribut contenant la valeur représentant le mode de restriction, le mode de restriction contrôle le moyen de lecture de façon qu'il reproduise les données de contenu à partir du début de la région de reproduction à une vitesse de reproduction prédéterminée.

4. Appareil de reproduction selon la revendication 1,
dans lequel, lorsque la commande de contrôle est effectuée pendant que le moyen de lecture est en train de reproduire les données de contenu correspondant aux informations de désignation de reproduction ayant les informations d'attribut contenant la valeur représentant le mode de restriction, le mode de restriction permet uniquement à la commande de contrôle de faire arrêter par le moyen de lecture la reproduction des données de contenu, et
dans lequel lorsque la commande de contrôle provoquant la reproduction par le moyen de lecture de données de contenu à partir d'un instant quelconque dans une région de reproduction correspondant aux informations de désignation de reproduction ayant les informations d'attribut contenant la valeur représentant le mode de restriction est effectuée, le mode de restriction contrôle le moyen de lecture de façon qu'il reproduise les données de contenu à partir du début de la région de reproduction à une vitesse de reproduction prédéterminée.

5. Appareil de reproduction selon la revendication 1,
dans lequel, pendant que le moyen de lecture est en train de reproduire les données de contenu correspondant aux informations de désignation de reproduction ayant les informations d'attribut contenant la valeur représentant le mode de restriction, lorsque la commande de contrôle provoque l'arrêt par le moyen de lecture de la reproduction des données de contenu correspondant aux informations de désignation de reproduction et saute jusqu'à la fin de la région de reproduction correspondant aux informations de désignation de reproduction, le mode de restriction interdit l'exécution de la commande de contrôle.

6. Appareil de reproduction selon la revendication 1,
dans lequel, lorsque la commande de contrôle est effectuée, le moyen de lecture détermine s'il est autorisé d'exécuter la commande de contrôle conformément à la table pour la valeur représentant le mode de restriction contenu dans les informations d'attribut des informations de désignation de reproduction correspondant aux données de contenu que le moyen de lecture est en train de reproduire,
dans lequel, lorsque le résultat déterminé représente le fait qu'il est autorisé d'exécuter la commande de contrôle, le moyen de lecture détermine si la commande de contrôle est exécutée dans une première région de reproduction correspondant aux informations de désignation de reproduction, et
dans lequel, lorsque le résultat déterminé représente le fait que la commande de contrôle n'est pas exécutée dans la première région de reproduction, le moyen de lecture détermine si la commande de contrôle permet uniquement au moyen de lecture de reproduire les données de contenu à partir du début d'une deuxième région de reproduction conformément à la table pour la valeur représentant le mode de restriction contenu dans les informations d'attribut des informations de désignation de reproduction correspondant à la deuxième région de reproduction à partir de laquelle la commande de contrôle provoque un nouveau début de reproduction par le moyen de lecture de données de contenu.

7. Procédé de reproduction pour reproduire les données de contenu d'un support d'enregistrement en forme de disque en utilisant un appareil de reproduction, comprenant les étapes consistant à :
lire des données sur un support d'enregistrement sur lequel sont enregistrés au moins des données de contenu, des informations de désignation de reproduction désignant un chemin de reproduction des données de contenu et contenant un champ mémorisant une valeur représentant un mode de restriction comme informations d'attribut par rapport à une désignation de contrôle de reproduction pour les données de contenu, et un programme de contrôle de reproduction contrôlant la reproduction des données de contenu ;
reproduire les données de contenu conformément au programme de contrôle de reproduction ; et
générer une commande de contrôle pour l'étape de lecture correspondant à une opération d'un utilisateur effectuant la désignation de contrôle de reproduction pour les données de contenu,
dans lequel l'appareil de reproduction mémorise plusieurs combinaisons de restrictions d'opération d'utilisateur, correspondant chacune à un mode de restriction prédéfini ;
dans lequel l'étape de lecture est exécutée en lisant sur le support d'enregistrement la valeur représentant le mode de restriction des informations de désignation de reproduction, en créant une table pour la valeur représentant le mode de restriction des informations de désignation de reproduction, dans lequel ladite table contient la combinaison des restrictions des opérations d'utilisateur correspondant audit mode de restriction, et en contrôlant la permission ou l'absence de permission d'exécution de la commande de contrôle générée par l'étape de génération de commande de contrôle conformément à la table ;
et dans lequel une première valeur dudit mode de restriction indique que toutes les opérations d'utilisateur sont autorisées et des deuxième et troisième valeurs pour ledit mode de restriction représentent différentes combinaisons de restrictions d'opération d'utilisateur.

8. Programme de reproduction faisant exécuter par un dispositif informatique le procédé de reproduction selon la revendication 7.
